# EUROPEAN PATENT APPLICATION

(11) **EP 4 606 646 A1**
(43) Date of publication of application: **27.08.2025**
(21) Application number: 23879799.7
(22) Date of filing: 17.10.2023
(51) Int. Cl.: B60Q 1/50, B60Q 1/00, B60Q 1/26, B60Q 1/52, B60R 11/02, C03C 27/12, F21V 5/00, F21V 7/00, F21V 9/40, F21V 9/45, F21V 14/04, F21V 23/00, G03B 21/00, F21W 103/00, F21Y 115/10, F21Y 115/20

(54) **INFORMATION DISPLAY DEVICE**

(30) Priority: 18.10.2022 JP 2022167164; 18.10.2022 JP 2022167165
(71) Applicant: SEKISUI CHEMICAL CO., LTD., Osaka-shi Osaka 530-8565 (JP)
(72) Inventor: OOTA, Yuusuke, Koka-shi, Shiga 528-8585 (JP); YANAI, Masashi, 6041LE Roermond (NL); TOMURA, Kazuhiro, 6045JB Roermond (NL); NAKAJIMA, Daisuke, 6041LE Roermond (NL); IZU, Yasuyuki, Mishima-gun, Osaka 618-0021 (JP)
(74) Representative: Ter Meer Steinmeister & Partner
(86) International application number: PCT/JP2023/037586
(87) International publication number: WO 2024/085156

(57) **Abstract**

An information display device (19) of the present invention includes a windshield (11) and a light source (13) irradiating the windshield (11) with light and displays at least one of information for outside a vehicle or information for inside the vehicle on a windshield (11) using light from the light source (13). Additionally, an information display device (69) of the present invention includes a light source (63) that irradiates a vehicle interior surface of a roof portion (61) of a vehicle with light, the information display device (69) displaying information on the vehicle interior surface of the roof portion (61) using light from the light source (63).

## Description

### Technical Field

The present invention relates to an information display device using a vehicle window glass of an automobile or the like.

### Background Art

In general, communication between a driver of a vehicle such as an automobile and a pedestrian outside the vehicle is often carried out through eye contact, gestures, and the like. In addition, heretofore, as a means for communicating with pedestrians, a technology of communicating by disposing an opaque display device such as an LED or an OLED on a body portion such as a front grille has been known (see PTL 1, for example). Moreover, brake lamps and the like are widely used as a means for conveying information to rear vehicles.

Additionally, in recent years, vehicles have been becoming increasingly automated, and since the driver does not drive during autonomous driving, he/she will be more aware of the space inside the vehicle. Hence, there is a demand for the decoration for more comfortable in-vehicle space. For example, an information display system described in PTL 2 decorates the space of an autonomous vehicle by displaying information such as characters, symbols, and shapes on a panel.

### Citation List

### Patent Literature

PTL 1: WO 2017/056995
PTL 2: JP 2021-103195 A

### Summary of Invention

### Technical Problem

Incidentally, in recent years, since vehicles have been becoming increasingly automated and the driver does not drive during autonomous driving, the driver himself/herself is often unable to grasp the intention of the driving behavior of the automobile, and is often unable to convey the intention to a pedestrian through eye contact and the like. For this reason, even when the vehicle automatically stops by detecting the pedestrian, the pedestrian may not be able to determine whether or not the automobile has stopped for him/her.

Therefore, it is possible to convey the intention of autonomous driving to the pedestrian using the display device illustrated in PTL 1. However, at present, pedestrians often check the situation by communicating with the driver, and in many cases, smooth communication cannot be established by displaying information on parts other than the windshield which is the driver's line-of-sight position as in PTL 1.

Additionally, at present, the means for conveying information to rear vehicles is limited to brake lamps and the like, and is not sufficient. When an accident occurs with a vehicle, details of the accident cannot be conveyed to those behind, which may lead to an accident.

Moreover, in recent years, as customer needs have been becoming more and more specialized, there is a demand for customization to suit individual tastes, and a diverse range of options of automobiles and the like are available. Meanwhile, options for the vehicle window glass are more limited than for other parts, and the demand for customization of the vehicle window glass cannot be fully met by current technology.

The present invention has been made in view of the above problems, and aims to provide an information display device capable of carrying out smooth communication with the outside of the vehicle in vehicles such as an automobile, and conveying specific information to the outside of the vehicle. The present invention also aims to provide an information display device capable of displaying various types of information to the inside and outside of the vehicle in response to customization and the like.

Additionally, the information display system of PTL 2 does not disclose or suggest which window glass of an automobile should be used as a panel of the information display system to more effectively decorate an in-vehicle space.

Therefore, the present invention also aims to provide an information display device capable of effectively decorating an in-vehicle space.

### Solution to Problem

The gist of the present invention is as follows.
[1] An information display device including a vehicle windshield and a light source irradiating the vehicle windshield with light, the information display device displaying at least one of information for outside the vehicle or information for inside the vehicle on the vehicle windshield using light from the light source.
[2] The information display device according to [1], in which information for outside the vehicle is displayed.
[3] An information display device including a vehicle side glass and a light source irradiating the vehicle side glass with light, the information display device displaying at least one of information for outside the vehicle or information for inside the vehicle on the vehicle side glass using light from the light source.
[4] An information display device including a vehicle rear glass and a light source irradiating the vehicle rear glass with light, the information display device displaying at least one of information for outside the vehicle or information for inside the vehicle on the vehicle rear glass using t light from the light source.
[5] An information display device including a light source that irradiates a vehicle interior surface of a roof portion of a vehicle with light, the information display device displaying information on the vehicle interior surface of the roof portion using light from the light source.
[6] The information display device according to [5], in which a roof glass is provided in the roof portion and the light source irradiates the roof glass with light.
[7] An information display device including a screen that is capable of hanging down provided in a roof portion of a vehicle, and a light source that irradiates the screen with light, the information display device displaying information on the screen using light from the light source.
[8] An information display device including a light source that irradiates one of a vehicle windshield, a vehicle side glass, a vehicle rear glass, a vehicle interior surface of a roof portion of a vehicle, and a screen that is capable of hanging down provided in the roof portion of the vehicle with light, the information display device displaying information on one of the glass, the vehicle interior surface, and the screen using light from the light source.

### Advantageous Effects of Invention

According to the present invention, it is possible to provide an information display device capable of carrying out smooth communication with the outside of the vehicle in vehicles such as an automobile, and conveying specific information to the outside of the vehicle, or an information display device capable of effectively decorating an in-vehicle space.

It is also possible to display various types of information to the inside and outside of the vehicle in response to customization and the like.

### Brief Description of Drawings

[Fig. 1] Fig. 1 is a perspective view illustrating an automobile to which an information display device according to a first embodiment is applied.
[Fig. 2] Fig. 2 is a schematic diagram illustrating the information display device according to the first embodiment.
[Fig. 3] Fig. 3 is a schematic diagram illustrating an example of information shown on a windshield by the information display device according to the first embodiment.
[Fig. 4] Fig. 4 is a block diagram of the information display device according to the first embodiment.
[Fig. 5] Fig. 5 is a schematic diagram illustrating an example behavior in a case where an automobile is performing autonomous driving in the first embodiment.
[Fig. 6] Fig. 6 is a perspective view illustrating an automobile to which an information display device according to a fourth embodiment is applied.
[Fig. 7] Fig. 7 is a schematic diagram illustrating the information display device according to the fourth embodiment.
[Fig. 8] Fig. 8 is a schematic diagram illustrating an example of information shown on a side glass by the information display device according to the fourth embodiment.
[Fig. 9] Fig. 9 is a perspective view illustrating an automobile to which an information display device according to a fifth embodiment is applied.
[Fig. 10] Fig. 10 is a schematic diagram illustrating the information display device according to the fifth embodiment.
[Fig. 11] Fig. 11 is a rear view of an automobile for showing a rear glass displaying information in the fifth embodiment.
[Fig. 12] Fig. 12 is a perspective view illustrating an automobile to which an information display device according to a sixth embodiment is applied.
[Fig. 13] Fig. 13 is a schematic diagram illustrating the information display device according to the sixth embodiment.
[Fig. 14] Fig. 14 is a schematic diagram illustrating an information display device according to a seventh embodiment.
[Fig. 15] Fig. 15 is a diagram for describing positions of a roof portion and a roof glass of a vehicle.
[Fig. 16] Fig. 16 is a schematic diagram illustrating an information display device according to an eighth embodiment.
[Fig. 17] Fig. 17 is an example of information displayed on a roof glass in the information display device of the eighth embodiment.
[Fig. 18] Fig. 18 is an example of information displayed on the roof glass in the information display device of the eighth embodiment.
[Fig. 19] Fig. 19 is an example of information displayed on the roof glass in the information display device of the eighth embodiment.
[Fig. 20] Fig. 20 is an example of information displayed on the roof glass in the information display device of the eighth embodiment.
[Fig. 21] Fig. 21 is a diagram for describing a configuration of the information display device of the eighth embodiment.
[Fig. 22] Fig. 22 is a diagram for describing a display method of information in an information display device of an eleventh embodiment.
[Fig. 23] Fig. 23 is a diagram for describing an information display device of a twelfth embodiment.

### Description of Embodiments

Hereinafter, embodiments of an information display device of the present invention will be described with reference to the drawings.

### <First embodiment>

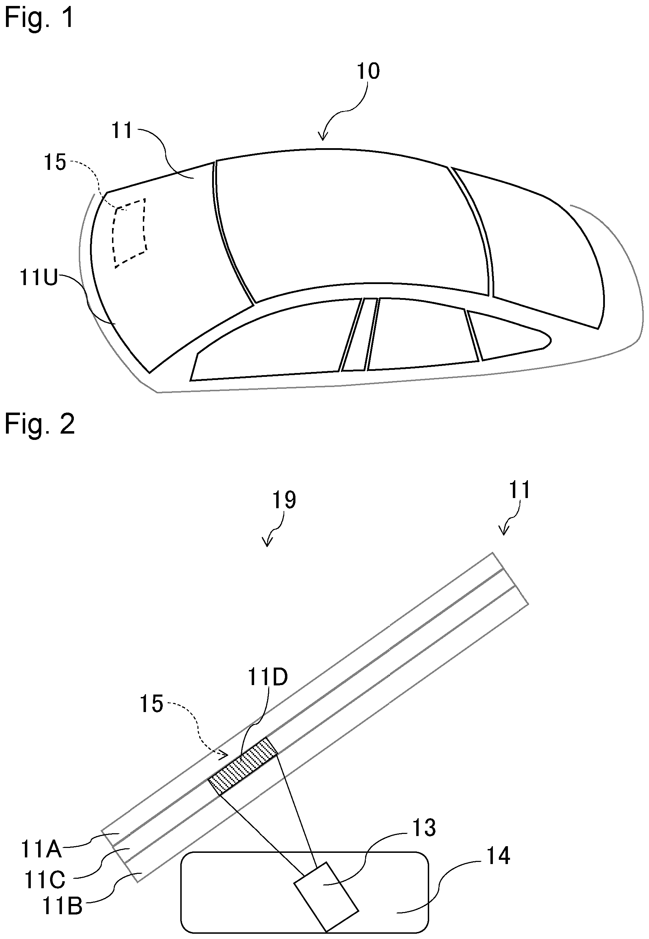

Fig. 1 illustrates an automobile to which an information display device according to a first embodiment of the present invention is applied. As illustrated in Fig. 1, an automobile 10 has a windshield 11 as a vehicle window glass. The windshield 11 is a window glass provided on a front surface of the automobile.

In the present embodiment, an information display region 15 for displaying information on the windshield 11 is provided. The information display region 15 is a region irradiated with light from a light source described below to display information on the windshield 11 by the light from the light source. In the present embodiment, since the information display region 15 is provided in the windshield 11, information is displayed in a part near the driver's line-of-sight position, whereby smooth communication can be carried out with people outside the vehicle such as pedestrians.

Note that while Fig. 1 illustrates a mode in which only one information display region 15 is provided, two or more information display regions 15 may be provided on the windshield 11. In the case where two or more information display regions are provided, two or more light sources may be provided corresponding to the number of information display regions, and an each of the information display regions may be irradiated with light from the respective light sources. Alternatively, the emission end of one light source may be displaced by swinging, for example, to irradiate two information display regions with light by one light source. The same applies to the following embodiments.

Fig. 2 is a schematic view illustrating an information display device 19 according to the present embodiment. As illustrated in Fig. 2, the information display device 19 includes the windshield 11 and a light source 13. The windshield 11 includes an outer glass plate 11A outside the vehicle, an inner glass plate 11B inside the vehicle, and an interlayer film 11C disposed between the two glass plates 11A and 11B, and is a laminated glass in which the glass plates 11A and 11B are bonded by the interlayer film 11C. The interlayer film 11C preferably is formed of a resin layer, and may have a single-layer structure consisting of a single resin layer, or may have a multilayer structure consisting of a plurality of resin layers.

Thermoplastic resin is preferably used as the resin used for each resin layer of the interlayer film. Additionally, while the thermoplastic resin used for the resin layer is not particularly limited, examples thereof include polyvinyl acetal resin, ethylene-vinyl acetate copolymer resin, ionomer resin, polyurethane resin, thermoplastic elastomer, acrylic resin, acrylic-vinyl acetate copolymer resin, polyvinyl alcohol resin, polyolefin resin, polyvinyl acetate resin, and polystyrene resin. Use of these resins facilitate secure bonding with members of the laminated glass. In each resin layer, one type of thermoplastic resin may be used on its own, or two or more types of thermoplastic resin may be used together. Additionally, of these resins, polyvinyl acetal resin is particularly suitable because it exhibits excellent adhesion to inorganic glass when the resin layer contains a plasticizer.

In a case where the resin layer contains thermoplastic resin, the resin layer may further contain a plasticizer. When the resin layer contains a plasticizer, the interlayer film becomes flexible, and as a result, the laminated glass becomes flexible. Moreover, in the case of a glass plate, particularly when the glass plate is inorganic glass, adhesion to the glass plate can be enhanced. The plasticizer is particularly effective if contained in the layer when polyvinyl acetal resin is used as the thermoplastic resin.

Examples of the plasticizer include organic ester plasticizers such as monobasic organic acid esters and polybasic organic acid esters, as well as phosphate plasticizers such as organic phosphate plasticizers and organic phosphite plasticizers. Among these, organic ester plasticizers are preferable, and triethylene glycol di-2-ethylhexanoate (3GO) is particularly suitable.

While the plasticizer content in each resin layer is not particularly limited, it is 20 to 100 parts by mass, and preferably 30 to 70 parts by mass, for example, for 100 parts by mass of thermoplastic resin. Furthermore, in a case where each resin layer contains thermoplastic resin, the thermoplastic resin or the thermoplastic resin and plasticizer is the main ingredient, and the total amount of thermoplastic resin and plasticizer in each resin layer is usually 70% or more by weight, preferably 80% or more, and further, preferably 90% or more, based on the total amount of the resin layer.

While the thickness of the interlayer film 11C is not particularly limited, it is 0.1 mm to 3 mm, preferably 0.2 mm to 2 mm, and more preferably 0.3 mm to 1 mm, for example.

Both inorganic glass and organic glass can be used as the glass plates 11A and 11B. While not particularly limited, examples of the inorganic glass include clear glass, float plate glass, polished plate glass, patterned plate glass, wired plate glass, lined plate glass, and green glass. Meanwhile, those generally referred to as resin glass are used as the organic glass, and, although not particularly limited, examples thereof include transparent organic glasses made from polycarbonate, acrylic resin, acrylic copolymer resin, polyester, and the like.

The glass plates 11A and 11B may be made of the same type of material or may be made of different materials, and one may be inorganic glass while the other may be organic glass, for example. Note, however, that in a case where a plurality of glass plates are provided, it is preferable that all of the plurality of glass plates are inorganic glass or all of the plurality of glass plates are organic glass.

While the thickness of each glass plate is not particularly limited, it is about 0.1 mm to 15 mm, and preferably 0.5 mm to 5 mm, for example. The thickness of the glass plates may be the same or may be different.

As illustrated in Fig. 2, the windshield 11 is provided with a light-diffusing portion 11D in a part corresponding to the information display region 15. In the light-diffusing portion 11D, light from the light source 13 is incident, and the incident light is diffused, and thereby, an image corresponding to the incident light can be displayed as information. In the present embodiment, the light-diffusing portion 11D preferably has so-called backward light diffusivity, and preferably diffuses light incident from the light source 13 inside the vehicle to emit the light to the rear side, i.e., to the outside of the vehicle, so that information corresponding to the light from the light source 13 can be displayed to the outside of the vehicle.

Note, however, that the light-diffusing portion 11D can also have forward light diffusivity by using light-diffusing particles described later, for example, and can diffuse light entering from the light source 13 inside the vehicle to emit the light to the inside of the vehicle. Accordingly, information displayed on the windshield 11 can be viewed from both the inside and outside of the vehicle. Hence, the information displayed to pedestrians and the like outside the vehicle is also displayed to the driver and the like inside the vehicle, so that the driver can check the information displayed to the pedestrians and the like outside the vehicle.

As illustrated in Fig. 2, for example, in the windshield 11, a region where the interlayer film 11C is not provided is formed between the glass plates 11A and 11B, and the light-diffusing portion 11D may be disposed in the region where the interlayer film 11C is not provided. As a result, the light-diffusing portion 11D is preferably disposed inside the interlayer film 11C.

The light-diffusing portion 11D includes a light diffusion layer in which light-diffusing particles are dispersed in resin. As illustrated in Fig. 2, the light-diffusing portion 11D may be composed of a single light diffusion layer, or may have a multilayer structure including layers other than the light diffusion layer such as an adhesive layer for bonding the light diffusion layer to a glass plate. Note, however, that the light-diffusing portion 11D does not need to have the region not including the interlayer film 11C, and may be held in the interlayer film 11C by being embedded in the interlayer film 11C or being bonded on a surface of the interlayer film 11C.

The light-diffusing particles used for the light-diffusing portion 11D are particles that scatter incident light. Examples of the light-diffusing particles include silicon oxide such as silica, zirconium oxide, titanium dioxide, aluminum oxide such as alumina, magnesium oxide, cerium oxide, and other semi-metallic or metallic oxide particles, as well as metal particles such as aluminum, silver, platinum, gold, titanium, nickel, tin, indium, and tin-cobalt alloys, calcium carbonate, glass flakes, mica, and diamond particles. The light-diffusing particles preferably have an average particle diameter of 1 nm or more and 50 µm or less. Note that while the light-diffusing particles may be particles having an average particle diameter of 1 µm or more, they may be nanoparticles having an average particle size of less than 1 µm, such as titanium dioxide nanoparticles, silver nanoparticles, and diamond nanoparticles. By using nanoparticles as the light-diffusing particles, it is possible to prevent a significant loss of transparency in the light diffusion region. Note that the average particle diameter of the light-diffusing particles can be measured by a laser diffraction / scattering method.

The resin used for the light diffusion layer may be thermoplastic resin, or resins other than thermoplastic resin such as thermosetting resin. While the resins cited as those usable for the interlayer film described above can be used as the thermoplastic resin, other thermoplastic resins may be used.

The region of the windshield 11 other than the part where the light-diffusing portion 11D (i.e., information display member) is provided as described above preferably has a high visible light transmittance from the viewpoint of ensuring high transparency, and specifically, it is preferably 70% or more, more preferably 75% or more, and even more preferably 80% or more. Note that transmittance refers to visible light transmittance, and can be obtained by measuring in accordance with JIS R3212 (2015).

On the other hand, the visible light transmittance of a part of the windshield 11 where the light-diffusing portion 11D (i.e., information display member) is provided may be low, and it may be less than 70%, or may be 70% or more. The visible light transmittance of the part where the light-diffusing portion 11D is provided is preferably above a certain level, such as 1% or more, and preferably 10% or more, because it has backward light diffusivity.

The light-diffusing portion 11D (i.e., information display region 15) is preferably disposed in a region that does not obstruct the driver's forward field of vision, and as illustrated in Fig. 1, it is preferably disposed at somewhere in a lower part of the windshield 11, for example.

Note that the lower part is a region from a lower end portion 11U of the front glass 11 to a length of 40% or less of the vertical dimension of the glass, preferably a length of 30% or less, more preferably a length of 20% or less, and even more preferably a length of 15% or less. By disposing the light-diffusing portion 11D, i.e., the information display region 15 in one of these regions, it is possible to prevent the displayed information and the light-diffusing portion 11D from obstructing the driver's forward field of vision.

Additionally, to make the information easily recognizable from people outside the vehicle, the length is preferably 3% or more, and more preferably 5% or more. Note that the lower end portion 11U refers to the lower outermost portion of an exposed part of the glass surface of the windshield 11 outside the vehicle. The same applies to an upper end portion of the windshield and an upper end portion and lower end portion of a rear glass described below. Additionally, the vertical dimension of the glass refers to the maximum length in the vertical direction of the exposed part of the glass surface outside the vehicle.

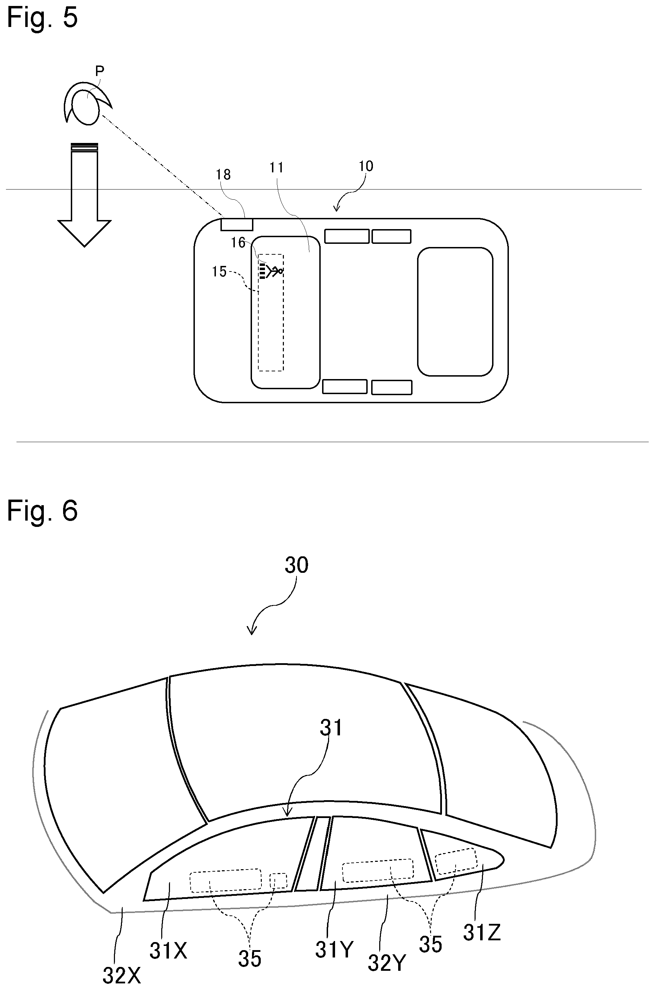

As illustrated in Fig. 1, the light-diffusing portion 11D (or information display region 15) may be disposed only on one of left and right sides of the windshield (only left side in Fig. 1) in the lower part of the windshield 11, but may be provided so as to extend from the left to right sides of the windshield as illustrated in Fig. 5.

When the light-diffusing portion 11D (or information display region 15) is disposed only on one side, although not particularly limited, it is preferably disposed on the opposite side of the driver's seat side. When the driver's seat is provided on the left side, the light-diffusing portion 11D (or information display region 15) is preferably disposed on the right side of the windshield as illustrated in Fig. 1. When the driver's seat is provided on the right side, the light-diffusing portion 11D (or information display region 15) is preferably disposed on the left side of the windshield (not illustrated). By disposing in this manner, it is easier to prevent the light-diffusing portion 11D (or information display region 15) from obstructing the driver's field of vision.

Note that the right side of the windshield 11 refers to, when viewed from the inside of the vehicle, a part on the right side of the center of the windshield 11 and the left side of the windshield 11 refers to a part on the left side of the center of the windshield 11.

The light source 13 is provided inside the vehicle. As illustrated in Fig. 2, for example, the light source 13 may be provided in a dashboard 14, or may be provided on an upper portion of the dashboard 14. The light source 13 may be a projector capable of displaying various images, for example, and may be a full-color (RGB) projector or a projector that emits monochromatic light, such as an LED projector. Alternatively, an ultrashort-throw (UST) projector or the like may be used, or a video display system using a digital mirror device known as a so-called DLP (R) projector or the like may be used.

In a case of displaying a projected image without changing it, such as displaying a fixed icon, a fixed message, or the like, there is no need to use a projector, and a light source that irradiates a laminated glass with a certain amount of light corresponding to the image may be used.

It is preferable that an image corresponding to light from the light source 13 is displayed on the information display region 15 of the windshield 11, and if the light from the light source 13 is monochromatic light, for example, a monochromatic image is displayed on the windshield 11. If the light from the light source 13 is in full color, a full-color image is displayed on the windshield 11.

In the present embodiment, information for outside the vehicle is displayed on the information display region 15. The displayed information is preferably various messages directed to the outside of the vehicle, and is more preferably messages directed at surrounding pedestrians or persons equivalent to pedestrians, such as drivers of light vehicles such as bicycles (hereinafter, these persons may be collectively referred to as "pedestrian or the like").

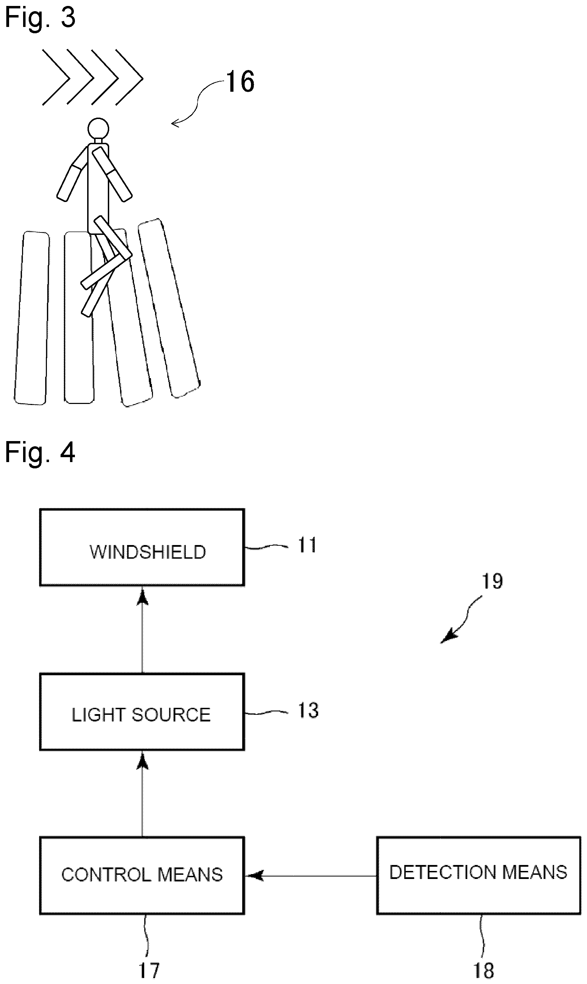

Preferable messages include messages related to the driving behavior of the vehicle. Specifically, as illustrated in Fig. 3, it may be a message 16 indicating that the vehicle is stopped continuously and the pedestrian is prompted to cross the road. Although not illustrated, examples of the message include a message indicating that the vehicle is about to start, a message indicating that the vehicle will continue to travel, a message indicating that the vehicle will decelerate, a message indicating that the vehicle will accelerate, a message indicating that the vehicle will turn left, a message indicating that the vehicle will turn right, a message indicating that the vehicle will back up, and a message indicating that the vehicle will make a U-turn.

As described above, the message may be only a design as illustrated in Fig. 3, may be only characters, or may be a combination of characters and a design. Note that the characters or design may be a symbol, an icon, a shape, a picture, or the like. In the case of characters, a message such as "after you" may indirectly indicate that the vehicle will continue to be stopped, or a message such as "stopped", "starting", and " decelerating" may directly indicate the driving behavior of the vehicle.

As a matter of course, the displayed information is not limited to messages related to the driving behavior of the vehicle, and may be a simple greeting such as "good morning" and "thank you", or may be a product logo, a simple pattern, or the like.

In a case where the vehicle is performing autonomous driving, the information related to driving behavior displayed on the information display region 15 is preferably displayed automatically according to the autonomous driving behavior. Additionally, the information display device 19 may grasp the situation outside the vehicle and display information on the windshield 11 in response to the situation outside the vehicle. For example, as illustrated in Fig. 5, when a pedestrian or the like is detected, information may be displayed for the detected pedestrian or the like, or information adapted to the state of the pedestrian or the like may be displayed for the pedestrian or the like. Note that the information displayed for the pedestrian or the like is preferably a message or the like related to the driving behavior of autonomous driving as described above.

Fig. 4 is a block diagram illustrating a control system of the information display device 19. As illustrated in Fig. 4, the information display device 19 preferably includes, in addition to the windshield 11 and the light source 13, a control means 17 and a detection means 18. The control means 17 performs overall control of the information display device 19 and is configured of a CPU or the like provided in an automobile, but is not particularly limited.

The control means 17 controls ON and OFF of the light source 13 and the operation of the light source 13 according to the information to be displayed on the information display region 15. Additionally, the control means 17 may be configured to control the behavior of the automobile as a whole. Specifically, in a case where the vehicle performs autonomous driving, the control means 17 preferably also controls the driving behavior of the vehicle, and preferably controls the driving behavior of the vehicle based on detected information detected by the detection means 18.

In the present embodiment, the detection means 18 is a means for grasping the situation outside the automobile. Known on-board sensors can be used as the detection means 18, and specific examples thereof include in-vehicle cameras, optical radar such as 3D-LiDAR, ultrasonic sensors, and millimeter wave radar. The detection means 18 preferably includes a means for detecting a pedestrian or the like, and may detect the pedestrian or the like based on a video captured by an in-vehicle camera, for example.

Fig. 5 illustrates an example behavior in a case where the automobile is performing autonomous driving in the present embodiment. As illustrated in Fig. 5, for example, when it is detected by the detection means 18 that a pedestrian P is waiting on the roadside of the automobile, the sidewalk, or a pedestrian crossing waiting area, the automobile 10 stops by having the brakes activated by the control means 17, and the light source 13 is turned on to display the message 16 illustrated in Fig. 3 in the information display region 15 for the pedestrian P. As described above, the message 16 is a message indicating that the vehicle is stopped continuously and the pedestrian P is prompted to cross the road. With the above series of operations, the automobile 10 can send the information corresponding to the driving situation to the pedestrian P as a message, and can carry out smooth communication with the pedestrian or the like even during autonomous driving.

Note that while the example illustrated in Fig. 5 uses an example of communicating with the pedestrian P, it is possible to similarly communicate with the driver of a light vehicle such as a bicycle. Alternatively, it is also possible to communicate with the driver or the like of another automobile.

Moreover, the mode illustrated in Fig. 5 indicates an example behavior of information display in the present embodiment, the information display behavior is not limited to the above. For example, when the detection means 18 detects that there is a pedestrian or the like nearby, it may display a message related to the driving behavior of the automobile on the information display region 15 for the pedestrian as appropriate. More specifically, when the automobile starts according to autonomous driving, when detecting that the pedestrian or the like is in front of the automobile, a message indicating that the automobile 10 is starting may be displayed on the information display region 15 for the pedestrian or the like before starting, and any other message related to a driving behavior may be displayed on the information display region 15.

Here, the position of the information displayed on the information display region 15 may be changed as appropriate according to the position of the detected pedestrian or the like, and as illustrated in Fig. 5, for example, if a pedestrian or the like is detected to be on the right side of the automobile 10, the information (e.g., message 16) is preferably displayed on the right side of the windshield 11. If a pedestrian or the like is detected to be on the left side of the automobile 10, the information (e.g., message 16) is preferably displayed on the left side of the windshield 11. Moreover, if the pedestrian or the like moves or the automobile 10 moves and the position of the pedestrian or the like changes with respect to the automobile 10, the region where the information is displayed may also move according to the change. For example, when the pedestrian or the like moves from the right to left of the automobile 10, the region where the information is displayed may also move from the right to left of the information display device 15.

Note that while the above description illustrates a mode in which the light-diffusing portion 11D is provided as a member separate from the interlayer film 11C, the interlayer film 11C itself may be used as a light-diffusing portion. For example, in a case where the interlayer film 11C has a single-layer structure, a single resin layer may be used as a light diffusion layer. Meanwhile, in a case where the interlayer film 11C has a multilayer structure, one of a plurality of resin layers may be used as a light diffusion layer.

While the light-diffusing portion 11D is provided in a part of the windshield 11 in the above description, it may be provided over the entire region of the windshield 11. In the case where the light-diffusing portion is provided over the entire region of the windshield 11, the light-diffusing portion 11D with relatively high transparency is preferably used, and the windshield 11 (laminated glass) with a visible light transmittance of 70% or more, more preferably 80% or more, and even more preferably 85% or more, for example, may be appropriately selected and used. In addition, in the case where the light-diffusing portion is provided over the entire region of the windshield, it is preferable that the interlayer film 11C itself is used as the light-diffusing portion from the viewpoint of providing the light-diffusing portion over the entire region of the windshield with a simple structure.

### <Second embodiment>

In the first embodiment described above, the light-diffusing portion 11D is provided in a position corresponding to the information display region 15 of the windshield 11. However, the light-diffusing portion 11D does not need to be provided in the information display region 15 as long as information can be displayed by light from the light source 13.

For example, a light controlling device may be provided instead of the light-diffusing portion 11D. A mode in which a light controlling device is provided instead of the light-diffusing portion 11D will be described below as a second embodiment. Note that in the following description, parts where descriptions are omitted are the same as the first embodiment.

A light controlling device is a device that changes its visible light transmittance by switching between applying and not applying a voltage, and specifically, it is preferably a device that switches between a mode with high visible light transmittance and a mode with low visible light transmittance by applying and not applying a voltage.

The light controlling device preferably includes a light modulation layer. The light modulation layer is preferably configured of a liquid crystal layer such as polymer-dispersed liquid crystal (PDLC). When a voltage is applied to a liquid crystal layer, the liquid crystal is oriented in one direction and light is transmitted in the thickness direction of the light controlling device. Accordingly, when the light controlling device has a liquid crystal layer, when a voltage is applied, the light transmittance of the light controlling device generally increases and it becomes transparent. On the other hand, when no voltage is applied, the light transmittance of the light controlling device becomes low.

Additionally, the light modulation layer may be a suspended particle device (SPD) layer containing a resin matrix and a light-adjusting suspension dispersed in the resin matrix, or it may be an electrochromic layer. The electrochromic layer is a layer composed of electrochromic materials that have electrochromic properties. Moreover, the light modulation layer may also be an electrophoresis layer that includes electrophoresis particles and a dispersant that disperses the electrophoresis particles.

The light controlling device preferably includes a liquid crystal layer, and more preferably includes a PDLC. A light controlling device including a liquid crystal layer such as a PDLC has a fast response time and can quickly switch between low and high visible light transmittance. It also has good light diffusion properties, which makes it easy to display information with high contrast by appropriately diffusing the light from the light source.

The light controlling device preferably is composed of two resin films and a light modulating film including a light modulation layer disposed between the two resin films, for example. Examples of the resin film included in the light controlling device include polyester resin films such as PET film and PEN film, (meta) acrylic resin films, TAC film, PES resin film, and polyimide resin film. Of these, polyester resin film is preferable in terms of handling and the like, and PET film is even more preferable. In addition, on each of the two resin films, a conductive layer that forms an electrode is preferably provided on the side facing the light modulation layer, and a voltage is applied to the light modulation layer via the conductive layer.

In the second embodiment, the light controlling device is preferably switched to a mode with low visible light transmittance and irradiated with light from the light source 13 to display information. In the light controlling device, in the mode with low visible light transmittance, the light from the light source scatters in the light modulation layer such as the liquid crystal layer and has back scattering properties, making it possible to display information outside the vehicle. Additionally, in general, information displayed on the windshield by light from the light source has forward scattering properties, allowing it to be viewed from inside the vehicle.

When the light controlling device is switched to a mode with high visible light transmittance, the visible light transmittance at the part of the laminated glass (windshield 11) where the light controlling device is provided may be 70% or more as in the part where a light-diffusing portion 11D is provided, or may be less than 70%.

On the other hand, when the light controlling device is switched to a mode with low visible light transmittance, the visible light transmittance at the part of the laminated glass where the light controlling device is provided may be less than70%, may be 50% or less, may be 30% or less, may be 10% or less, or, for example, may be 0.1% or more but may be 1% or more.

As with the light-diffusing portion 11D, a region where an interlayer film 11C is not provided may be formed partially between glass plates 11B and 11C and the light controlling device may be disposed in the region where the interlayer film 11C is not provided, or the light controlling device may be embedded in the interlayer film 11C, or may be bonded on a surface of the interlayer film 11C.

While the above description of the second embodiment has been given on the assumption that the light controlling device is provided in a partial region of the windshield 11, it may be provided over the entire region of the windshield 11. Additionally, in the case where the light controlling device is provided over the entire region of the windshield 11, it is preferable that the interlayer film has a multilayer structure provided with two or more resin layers and the light controlling device is disposed between the two resin layers.

### <Third embodiment>

A component other than the light-diffusing portion and the light controlling device may be provided in the image display region, and in the above first embodiment, a light-emitting portion may be provided instead of the light-diffusing portion. A mode in which a light-emitting portion is provided instead of the light-diffusing portion 11D in an image display region 15 in the first embodiment will be described below as a third embodiment. Note that in the following description, parts where descriptions are omitted are the same as the first embodiment.

The light-emitting portion is a portion that emits light itself when irradiated with light from a light source, and may specifically contain a fluorescent material. In the third embodiment, light from the light source is preferably excitation light that excites the fluorescent material. The excitation light may be visible light or ultraviolet light, but it is preferably ultraviolet light. The light-emitting portion emits visible light of a color corresponding to the fluorescent material when irradiated with excitation light from the light source, thereby displaying information outside the vehicle.

Additionally, light from the light-emitting portion may be radiated to the outside and also to the inside of the vehicle, so that the information displayed on the windshield can be viewed from both inside and outside of the vehicle.

A fluorescent material is a material that emits visible light when excited by the incident excitation light. More specifically, it is a material that absorbs the excitation light emitted from the light source described above and emits visible light with a longer wavelength than the excitation light. A fluorescent material may also be a material that emits so-called phosphorescence when excited by the excitation light.

As fluorescent materials, specifically, lanthanoid complexes with ligands containing halogen atoms can be used because they exhibit high luminescence. Among lanthanoid complexes, lanthanoid complexes with ligands containing halogen atoms emit light with high intensity when irradiated with light. Examples of lanthanoid complexes with ligands containing halogen atoms include: lanthanoid complexes with monodentate ligands containing halogen atoms; lanthanoid complexes with bidentate ligands containing halogen atoms; lanthanoid complexes with tridentate ligands containing halogen atoms; lanthanoid complexes with tetradentate ligands containing halogen atoms, lanthanoid complexes with pentadentate ligands containing halogen atoms, and lanthanoid complexes with hexadentate ligands containing halogen atoms.

In particular, lanthanoid complexes with bidentate ligands containing halogen atoms or lanthanoid complexes with tridentate ligands containing halogen atoms are capable of emitting visible light with high luminous intensity when irradiated with light of wavelengths between 300 and 410 nm.

In the present specification, the term lanthanoid includes lanthanum, cerium, praseodymium, neodymium, promethium, samarium, europium, gadolinium, terbium, dysprosium, holmium, erbium, thulium, ytterbium, or lutetium. Since they provide even higher luminous intensity, neodymium, europium, or terbium are preferable, and europium or terbium are even more preferable, and europium is even more preferable for lanthanoid.

The fluorescent material mentioned above can also be a fluorescent material with a terephthalic acid ester structure. Examples of fluorescent materials with a terephthalate acid ester structure include dialkyl dihydroxy terephthalates such as diethyl-2,5-dihydroxyterephthalate and dimethyl-2,5-dihydroxyterephthalate.

As with the light-diffusing portion 11D of the first embodiment, a region where an interlayer film 11C is not provided may be formed partially between glass plates 11B and 11C and the light-emitting portion may be disposed in the region where the interlayer film 11C is not provided. The light-emitting portion includes a light-emitting layer containing a fluorescent material. Typically, the light-emitting layer is formed by dispersing a fluorescent material in resin. The resin used for the light-emitting layer may be thermoplastic resin, or resins other than thermoplastic resin such as thermosetting resin. While the resins cited as those usable for the interlayer film described above can be used as the thermoplastic resin, other thermoplastic resins may be used.

The light-emitting portion may be composed of a single light-emitting layer, or may have a multilayer structure including layers other than the light-emitting layer such as an adhesive layer for bonding the light-emitting layer to a glass plate.

Note, however, that the light-emitting portion does not need to be provided in a region where the interlayer film 11C is not provided, and may be embedded in the interlayer film 11C.

Additionally, the light-emitting portion does not need to be provided as a member separate from the interlayer film 11C, and the interlayer film 11C itself may be used as the light-emitting portion. For example, in a case where the interlayer film 11C has a single-layer structure, a single resin layer may be used as a light-emitting layer. Meanwhile, in a case where the interlayer film 11C has a multilayer structure, one of a plurality of resin layers may be used as a light-emitting layer. Moreover, as with the light-diffusing portion, the light-emitting portion, is also preferably provided over the entire region of the windshield 11. Note that in the case where the light-emitting portion is provided over the entire region of the windshield, it is preferable that the interlayer film 11C itself is used as the light-emitting portion from the viewpoint of providing the light-emitting portion over the entire region of the windshield with a simple structure.

Note that in the above first to third embodiments, the installation position and mode in which the light-diffusing portion, the light controlling device, and the light-emitting portion are provided are not limited to the above, and various modes are conceivable, such as by being bonded to one of the glass plates 11A and 11B of a laminated glass 11. Specifically, any of the light-diffusing portion, the light controlling device, or the light-emitting portion may be bonded to an inner surface or outer surface of the outer glass plate 11A or an inner surface or outer surface of the inner glass plate 11B.

Moreover, the light-diffusing portion, the light controlling device, and the light-emitting portion may form at least a part of a glass plate, and by mixing light-diffusing particles into at least one of the glass plates 11A or 11B, for example, at least one of the glass plates 11A or 11B may be used as a light-diffusing portion. In addition, by mixing fluorescent particles into at least one of the glass plates 11A or 11B, at least one of the glass plates 11A or 11B may be used as a light-emitting portion.

### <Fourth embodiment>

Next, a fourth embodiment of the present invention will be described. While the above first to third embodiments are modes in which information is displayed on a windshield, in the fourth embodiment, information is displayed on a side glass of an automobile. Hereinafter, the fourth embodiment will be described in detail. Note that in the following description, parts where descriptions are omitted are the same as the first embodiment.

As illustrated in Fig. 6, an automobile 30 has a side glass 31 as a vehicle window glass. The side glass 31 is a window glass provided on a side surface of the automobile. While the side glass 31 is generally a front side glass 31X provided in a front side door 32X and a rear side glass 31Y provided in a rear side door 32Y, a rear quarter glass 31Z provided further behind the rear side glass 31Y and a front quarter glass (not illustrated herein) provided in front of the front side glass 31X, for example, are also provided.

In the present embodiment, an information display region 35 is provided in the side glass 31. Note that while Fig. 6 illustrates a mode in which the information display region 35 is provided in all of the front side glass 31X, the rear side glass 31Y, and the rear quarter glass 31Z, the information display region 35 is preferably provided in at least one of the front side glass 31X, the rear side glass 31Y, the rear quarter glass 31Z, or the front quarter glass (not illustrated). In addition, while two information display regions 35 are provided in the front side glass 31X in Fig. 6, the number of information display regions is not limited as long as one or more information display regions are provided for one glass.

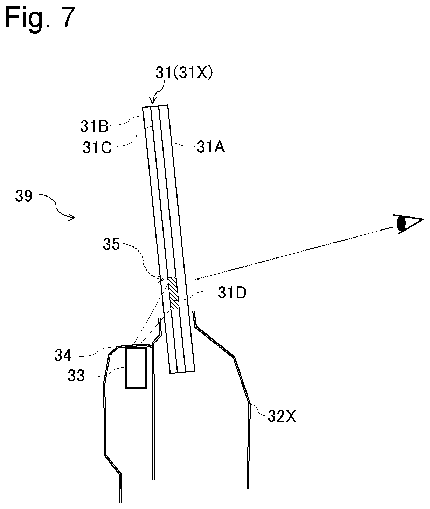

Fig. 7 is a schematic diagram illustrating an information display device 39 according to the present embodiment. Note that in Fig. 7, for convenience of explanation, the description will be given by using the front side glass 31X provided with the information display region 35 as an example, but since other side glasses have the same structure, descriptions thereof are omitted. As illustrated in Fig. 7, the information display device 30 includes the side glass 31 (front side glass 31X) and a light source 33. Similar to the windshield 11, the side glass 31X is a laminated glass including an outer glass plate 31A, an inner glass plate 31B, and an interlayer film 31C.

As illustrated in Fig. 7, the side glass 31X is provided with a light-diffusing portion 31D in a part corresponding to the information display region 35. In the light-diffusing portion 31D, light from the light source 33 is incident, and the incident light is diffused, and thereby, an image corresponding to the incident light can be displayed as information. In the present embodiment, the light-diffusing portion 31D preferably has one of backward light diffusivity or forward light diffusivity, but as described in the first embodiment, the light-diffusing portion normally has both. Since the light-diffusing portion 31D has backward light diffusivity, it can emit light that has been incident from the light source 33 inside the vehicle to the outside of the vehicle, and this makes it possible to display information corresponding to the light from the light source 33 outside the vehicle. Additionally, since the light-diffusing portion 31D has forward light diffusivity, it can diffuse light that has been incident from the light source 13 inside the vehicle and emit the light to the inside of the vehicle.

The configuration of the light-diffusing portion 31D is the same as that in the first embodiment, and as illustrated in Fig. 7, the light-diffusing portion may be partially provided in a certain region of the side glass 31X, or may be provided over the entire region of the side glass 31X, although not illustrated.

Although the light source 33 is not particularly limited as long as it is provided in the vehicle, it is preferably provided in a side door, for example, and as illustrated in Fig. 7, is preferably provided in the front side door 32X to irradiate the front side glass 31X with light. Additionally, to be more specific, the light source 33 is preferably provided inside a side door trim 34 or the like. Details of the light source 33 are as described in the first embodiment. As described above, the light source 33 is configured of a projector or the like, and can display various images on an information display region 35. Hence, in the present embodiment, it is possible to display customized information and the like inside and outside the vehicle according to the needs of occupants and the like of the automobile 30.

Information displayed on the side glass 31X is configured by design such as an icon, characters, or a combination thereof. The information displayed on the side glass 31X may be information for outside the vehicle, or may be information for inside the vehicle.

Information for the outside of the vehicle is preferably a message or the like directed at an occupant such as the driver before getting in or after getting out of an automobile. Specific examples include greetings for occupants, information about the condition of the automobile, warning messages, clocks, weather information, and trademarks and logos that indicate the name of the automobile manufacturer or the product name of the automobile. Information for inside the vehicle is preferably a message or the like directed at an occupant that has got on the automobile, and specific contents are the same as the information for outside the vehicle described above.

Note, however, that the information for outside the vehicle does not need to be a message directed at the occupant of the automobile 30, and may be a message directed at an occupant of another vehicle or a pedestrian.

Greetings for occupants may be greetings in writing such as "hello" and "welcome", or may be greetings using design such as an icon. Examples of information about the condition of the automobile include messages indicating the condition of the battery such as the charge rate, the condition of the tire such as the tire pressure, the cruising range, the fuel level, the lock status of the side and back doors, and the open/closed status of the side and back doors. An example of a warning message includes a message indicating abnormality when there is abnormality in the automobile.

Moreover, in a case where the automobile is used for car sharing, for example, reservation information, the name of the reservation holder's name, and the like may be displayed as a message.

Information for outside or inside the vehicle displayed on the side glass 31X may be an input operation guide. Examples of the input operation guide include touch switch icons that indicate input operation keys, numeric keypads, and keyboards. That is, the side glass 31X may be used as a member (touch panel) that receives input by touch. When the side glass panel is used as a touch panel, various types of information can be displayed on the side glass 31X by touch input. Note that "touch input" refers not only to an operation of directly touching the side glass with a finger and the like, but also to an input operation carried out by a touch operation detected by various detection means described later without directly touching the side glass.

Moreover, the side glass 31X may be used as a multi-touch display using images displayed on the information display region. When used as a multi-touch display, the side glass 31X can display multi-grid touch contents or be used as an information display terminal. The multi-touch display is preferably used in combination with the touch sensor described above. **In** the case where the side glass 31X is used as a multi-touch display, a display image corresponding to the multi-touch display is preferably displayed on the information display region 35.

The display image may show information stored in a memory of the automobile, or information acquired via the Internet. The multi-touch display may show various types of information, either outside or inside the car.

When the side glass 31X is used as a multi-touch display, it can enhance the usability and entertainment property of the automobile.

The information displayed on the side glass 31X only needs to be customized and set in advance by the occupant or the like as appropriate, and the information is preferably displayed on the side glass 31X according to the settings. Additionally, information displayed on the multi-touch display or the like may be customized and set in advance, and display images indicating the multi-touch display are preferably displayed according to the settings.

Similar to the first embodiment, the information display device 39 according to the present embodiment preferably includes a detection means and a control means (not illustrated). **In** the present embodiment, the detection means is a means for grasping the situation inside and outside the automobile or detecting whether there is a touch input on the side glass.

An example of the detection means is a touch sensor that detects a touch input on the side glass. The touch input detected by the touch sensor does not necessarily require the user to touch the display glass with their finger or other object. **In** other words, the touch sensor may detect when the user has brought their finger or other object close to a predetermined position on the display glass. The touch sensor may be of the capacitance type, resistive film type, or other type, but it may also be a so-called motion sensor. The motion sensor detects the motion of touching the side glass using a camera, an **IR** sensor, an ultrasonic sensor, or the like, and it is possible to detect the touch motion without providing a conductive layer or the like on the side glass 31X.

In addition, the motion sensor may be a sensor that detects motions other than touch input, such as a sensor that can detect when a person approaches the side glass, when an occupant gets in the vehicle, or when a person outside the vehicle or an occupant inside the vehicle performs a specific motion. Moreover, the detection means is not limited to a motion sensor or a touch sensor, and can be any other type of sensor, such as a sensor that detects when the key to an automobile (such as a smart key) is brought near the vehicle or brought into the vehicle. Moreover, as the detection means, various biometric authentication sensors such as a fingerprint authentication sensor, an iris authentication sensor, and a vein authentication sensor can also be used. For example, a biometric authentication sensor can be installed on the side door. Note that one or more detection means are preferably provided in the automobile.

The control means is preferably configured by a CPU or the like provided in the automobile. The control means only needs to control the operation of the light source 33, and, for example, it can turn on and off the information displayed on the side glass or change the display as appropriate, based on the detection information detected by the detection means or other input information (such as information related to switch input).

When a specific operation is performed from outside the vehicle or a change in the situation outside the vehicle is detected by the detection means, information for outside the vehicle is preferably displayed, the displayed information is changed, or the display is turned off. Specifically, when a touch input is detected from outside the vehicle using a touch sensor, or when a person or automobile key is detected approaching the automobile using a motion sensor or other sensor, or when a specific person is authenticated using biometric authentication, information for outside the vehicle is preferably displayed on the side glass 31X, the displayed information is changed, or the display is turned off. In addition, when a specific operation is performed from outside the vehicle (for example, if the vehicle is unlocked), even if the detection means does not detect anything, information is preferably displayed on the information display region, the displayed information is changed, or the display is turned off.

Similarly, when a specific operation is performed from inside the vehicle or when a change in the situation inside the vehicle is detected by the detection means, information for inside the vehicle is preferably displayed, the displayed information is changed, or the display is turned off. Specifically, when a touch input is detected from inside the vehicle using a touch sensor, or when it is detected by a motion sensor or other sensor that a person has entered the vehicle or that the automobile key has been brought into the vehicle, information for inside the vehicle is preferably displayed, or the displayed information is changed. In addition, when a specific operation is performed from inside the vehicle (for example, a switch input on an instrument panel or the like), even if the detection means does not detect anything, information is preferably displayed on the information display region, the displayed information is changed, or the display is turned off.

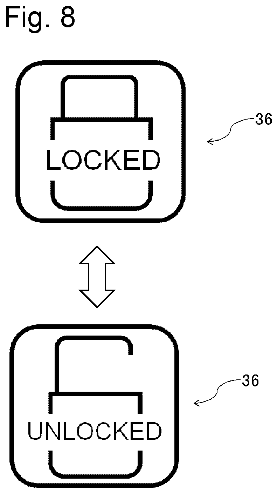

Fig. 8 illustrates an example of a mode of displaying information on a side glass. Fig. 8 is an example in which an icon 36 indicating the lock status of a door is shown as information. In this example, the icon 36 is displayed as information for outside the vehicle, for example, on the information display region 35 when the detection means detects that the key of the automobile 30 is approaching, for example, so that the occupant can be notified of the lock status of the door (e.g., front side door 31X).

Then, when the door is locked or unlocked by the key of the automobile 30 or the like, the display of the icon 36 is changed as illustrated in Fig. 8, and the occupant can easily check visually whether the door is locked or unlocked.

Note, however, that the icon 36 illustrated in Fig. 8 may be displayed based on other detection information, and may be displayed when it is detected that there is a touch input on the side glass 31X or that a person approaches the side glass, for example.

Of course, the information display region 35 of the side glass 31X may also display information other than the lock status, and when it is detected that the side door lock is released, a person approaches, or there is a touch input, for example, various types of information may be displayed on the side glass 31X, or the display may be changed or turned off. If there is some kind of input, or if the situation inside or outside the vehicle changes, various types of information can be displayed on the side glass, thereby providing a highly usable automobile.

Additionally, while the fourth embodiment illustrates a mode in which the light-diffusing portion 31D is provided in the information display region 35, as illustrated in the above second and third embodiments, the light controlling device or the light-emitting portion may be provided instead of the light-diffusing portion 31D in the information display region 35. As illustrated in the second and third embodiments, the light controlling device and the light-emitting portion may be provided in a partial region of the side glass 31Y or may be provided over the entire region of the side glass 31Y.

Moreover, while the fourth embodiment illustrates a mode in which the side glass is a laminated glass, it does not need to be a laminated glass, and may be a single glass plate being constituted of one glass plate. In the case of a single glass plate, the light-diffusing portion may be bonded to an outer surface or inner surface of the single glass plate, or the single glass plate itself may be used as the light-diffusing portion by mixing light-diffusing particles into the single glass plate.

In the case of a single glass plate, a light controlling device or a light-emitting portion may be provided instead of the light-diffusing portion, and the light controlling device or the light-emitting portion may be bonded to the outer surface or inner surface of the single glass plate, or the single glass plate itself may be used as the light-emitting portion.

Note that in the fourth embodiment described above, the visible light transmittance of the side glass 31 is the same as the windshield in the case of the front side glass 31 and the front quarter glass. On the other hand, in the case of the rear side glass and the rear quarter glass, the visible light transmittance of the part where the light-diffusing portion, the light controlling device, and the light-emitting portion are provided is as described above, but the visible light transmittance of the part where the light-diffusing portion, the light controlling device, and the light-emitting portion are not provided may be 70% or more, or may be less than 70%.

### <Fifth embodiment>

Next, a fifth embodiment of the present invention will be described. While the above first to fourth embodiments are modes in which information is displayed on the windshield or the side glass, in the fifth embodiment, information is displayed on a rear glass of an automobile. Hereinafter, the fifth embodiment will be described in detail. Note that in the following description, parts where descriptions are omitted are the same as the first embodiment.

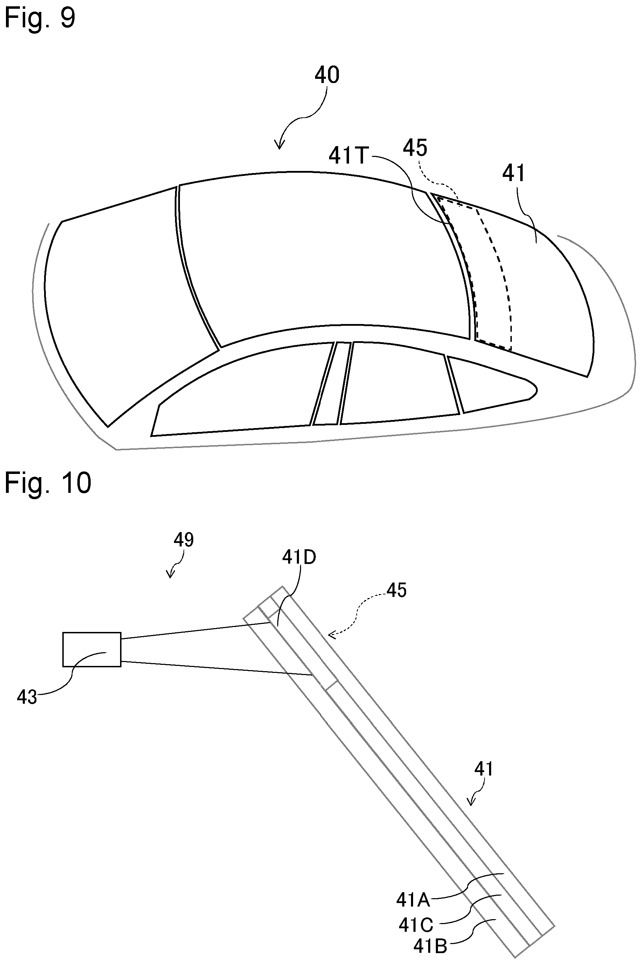

As illustrated in Fig. 9, an automobile 40 has a rear glass 41 as a vehicle window glass. The rear glass 41 is a window glass provided on a back surface of the automobile. In the present embodiment, an information display region 45 is provided in the rear glass 41. Note that while the present embodiment illustrates a mode in which only one information display region 45 is provided in the rear glass 41, two or more information display regions may be provided as in the first embodiment and other embodiments.

As illustrated in Fig. 10, in the present embodiment, a light controlling device 41D is preferably provided in the information display region 45. The light controlling device 41D and the information display region 45 are preferably provided in a partial region of the rear glass 41, and are preferably provided in an upper portion of the rear glass 41 as illustrated in Fig. 9. The information display region 45 can be easily viewed from rear vehicles by being disposed in a position in the upper part of the rear glass 41.

Note that the upper part of the rear glass 41 is a region from an upper end portion 41T of the rear glass 41 to a length of 40% or less of the vertical dimension of the glass, preferably a length of 30% or less, more preferably a length of 20% or less, and even more preferably a length of 15% or less. By disposing the light controlling device 41D, i.e., the information display region 45 in such a region, it is possible to prevent the displayed information from obstructing the rear field of vision.

Additionally, to make the information easily recognizable from the rear vehicles, the length is preferably 3% or more, and more preferably 5% or more. Note that the upper end portion 41T refers to the upper outermost portion of an exposed part of the glass surface of the rear glass 41 outside the vehicle.

A light source 43 only needs to be provided inside the vehicle, and is preferably provided on the vehicle's ceiling, for example. In the present embodiment, too, in the light controlling device 41D (i.e., information display region 45), light from the light source 43 is incident, and the light from the light source 43 is diffused in the light controlling device 41D, and thereby, an image corresponding to the incident light can be displayed as information. In the present embodiment, the light controlling device 41D preferably has backward light diffusivity to display information outside the vehicle appropriately, but may also have forward light diffusivity as in the first embodiment. By also having forward light diffusivity, it is possible to easily check the information displayed on the information display region 45 from inside the vehicle.

Note that details of the light source 43 and the light controlling device 41D are as described in the first and second embodiments, respectively, and therefore descriptions are omitted.

Note that while an example has been described in which the light controlling device 41D is provided in a partial region of the rear glass 41, it may be provided over the entire region of the rear glass 41 (not illustrated).

Additionally, as described in the second embodiment, the light controlling device 41D is preferably switched to the mode with low visible light transmittance and irradiated with light from the light source 43 to display information. Accordingly, in a case where the light controlling device 41D has a liquid crystal layer such as a PDLC, it is preferable that no voltage is applied thereto, and the information display region 45 is irradiated with light from the light source 43.

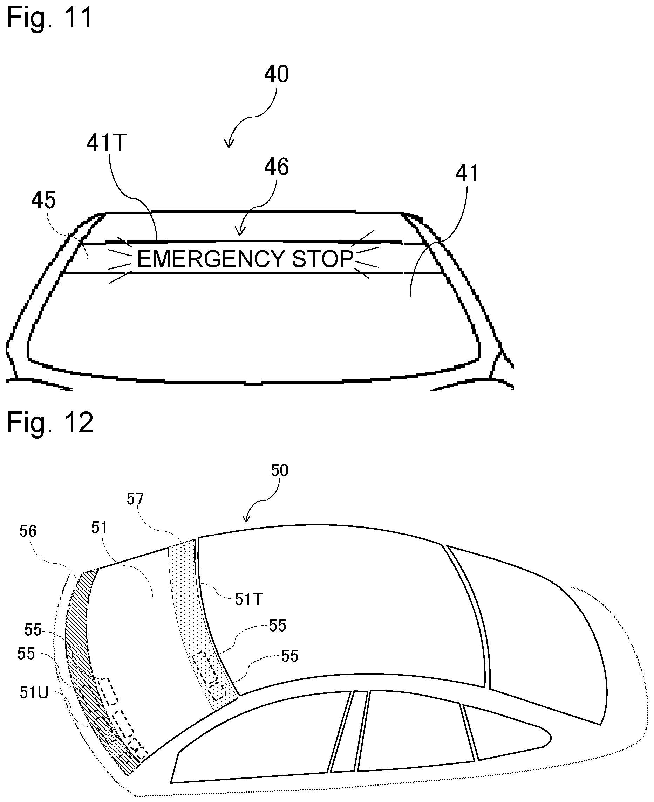

Information displayed on the information display region 45 of the rear glass 41 is preferably a message for outside the vehicle, particularly rear vehicles, and is configured of characters, design, or a combination thereof. As illustrated in Fig. 11, the information displayed on the rear glass 41 may be a message 46 related to the driving situation or future movements of the automobile 40, such as failure information, emergency braking, or sudden stops, or it may be a message related to traffic information, such as information of an accident that has occurred ahead, or it may be a message related to emergency information, such as warning messages. The information may be a greeting such as "Please go ahead".

The information displayed on the rear glass 41 is preferably displayed, the displayed information is changed, or the display is turned off in response to a specific operation such as a switch input by the driver or another occupant. Additionally, the information is preferably displayed as appropriate, the displayed information is changed, or the display is turned off according to the driving behavior. For example, if the brakes are applied suddenly, a message is preferably displayed in response to the sudden braking to indicate that the vehicle has slowed or stopped as a result of the sudden braking.

Moreover, while backlights (not illustrated) are generally provided in an automobile, information may be displayed in conjunction with the backlights as appropriate. For example, the message 46 is preferably displayed together with lighting of the backlight at the time of sudden braking or a sudden stop.

According to the present embodiment described above, since various types of information can be displayed in the information display region 45 on the rear glass 41 by light from the light source 43, specific information can be conveyed in detail to the outside of the vehicle, particularly to rear vehicles.

Note that while the fifth embodiment illustrates a mode in which the light controlling device 41D is provided in the information display region 45, as illustrated in the above first and third embodiments, a light-diffusing portion or a light-emitting portion may be provided instead of the light controlling device 41D in the information display region 45.

Moreover, while the present embodiment illustrates a mode in which information for outside the vehicle for other vehicles is displayed on the rear glass, as in the fourth embodiment, information for inside the vehicle may be displayed, or information for outside the vehicle for occupants of the automobile 40 may be displayed.

Additionally, while the present embodiment illustrates a mode in which the rear glass 41 is a laminated glass, it does not need to be a laminated glass, and may be a single glass plate being constituted of one glass plate. In the case of a single glass plate, the light controlling device may be bonded to an outer surface or inner surface of the single glass plate. Moreover, in the case of a single glass plate, too, a light-diffusing portion or a light-emitting portion may be provided instead of the light controlling device. The light controlling device or light-emitting portion may be bonded to an outer surface or inner surface of the single glass plate, or the single glass plate itself may be used as the light-emitting portion or the light-diffusing portion.

Additionally, while the visible light transmittance of the parts where the light-diffusing portion, the light controlling device, and the light-emitting portion are provided is as described above in the fifth embodiment, the visible light transmittance of the parts where the light-diffusing portion, the light controlling device, and the light-emitting portion are not provided may be 70% or more or may be less than 70% as described earlier.

### <Sixth embodiment>

Next, a sixth embodiment of the present invention will be described. In the present embodiment, although information is displayed on the windshield as in the first embodiment, the displayed information is mainly information for inside the vehicle. Hereinafter, the sixth embodiment will be described in detail. Note that in the following description, parts where descriptions are omitted are the same as the first embodiment.

As illustrated in Fig. 12, in the present embodiment, an information display region 55 is provided on a windshield 51 as in the first embodiment. While a plurality of information display regions 55 are provided in the present embodiment, the number of information display regions is not particularly limited as long as there is one or more.

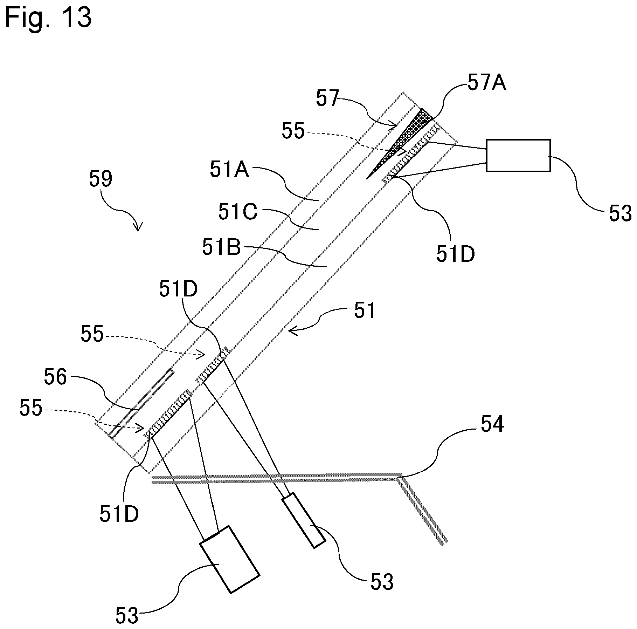

As illustrated in Fig. 13, a light-diffusing portion 51D is provided in a part of the windshield 51 corresponding to the information display region 55. In the light-diffusing portion 51D, light from a light source 13 is incident, and the incident light is diffused, and thereby, an image corresponding to the incident light can be displayed as information.

In the present embodiment, as in the first embodiment, the information display region 55 is preferably disposed in a region that does not obstruct the driver's forward field of vision, and may be disposed at somewhere in a lower part of the windshield 51, may be disposed at somewhere in an upper part thereof, or may be disposed at both of these parts as illustrated in Fig. 12.

Note that the lower part of the windshield 51 is as described above in the first embodiment. Additionally, the upper part of the windshield 51 is the same as in the description of the upper part in the fifth embodiment except that the rear glass 41 is replaced with the windshield, and therefore descriptions are omitted.

While the light-diffusing portion 51D (or information display region 55) may be disposed on only one of left and right sides (only left side in Fig. 12) of the windshield 11 as illustrated in Fig. 12, it may extend from left to right sides of the windshield (not illustrated).

When the light-diffusing portion 51D (or information display region 55) is disposed only on one side, although not particularly limited, it is preferably disposed on the same side as the driver's seat, so when the driver's seat is on the left side, the light-diffusing portion 51D (or information display region 55) is preferably disposed on the left side of the windshield as illustrated in Fig. 12. Meanwhile, when the driver's seat is on the right side, the light-diffusing portion 51D (or information display region 55) is preferably disposed on the right side of the windshield (not illustrated). With such arrangement, information displayed on the information display region 55 is easily viewed by the driver.

Fig. 13 is a schematic view illustrating an information display device 59 according to the present embodiment. As illustrated in Fig. 13, the information display device 59 includes the windshield 51 and a light source 53. As in the first embodiment, the windshield 51 is a laminated glass including an outer glass plate 51A, an inner glass plate 51B, and an interlayer film 51C. Details of the light source 53 are the same as the first embodiment, and therefore descriptions are omitted. Note that while a plurality of light sources 53 are provided for a plurality of information display regions 55 in the present embodiment, just one light source 53 may be provided instead.

Additionally, although not particularly limited, the light source 53 that irradiates the information display region 55 disposed at the lower part of the windshield 51 is preferably disposed in or on an upper part of a dashboard 54 as in the first embodiment. Additionally, although not particularly limited, the light source 53 that irradiates the information display region 55 in the upper part of the windshield 51 is preferably provided in the ceiling or the like.

As illustrated in Fig. 12, the windshield 51 may have a colored portion 57 or a shielding portion 56 referred to as black ceramics in some regions, but the information display region 55 (i.e., light-diffusing portion 51D) of the present embodiment is preferably disposed on the inner side of the vehicle than the colored portion 57 or the shielding portion 56 in the region where the colored portion 57 or the shielding portion 56 is arranged. With such a mode, light from the light source 53 is incident on the light-diffusing portion 51D without being obstructed by the colored portion 57 or the shielding portion 56, whereby an image with high contrast is easily displayed on the information display region 55. In addition, when viewed from outside the vehicle, the light-diffusing portion 51D is shielded by the shielding portion 56 or the colored portion 57. Therefore, the information displayed on the information display region 55 is not visible or is hardly visible from outside the vehicle, and thus privacy can be enhanced.

More specifically, using the example illustrated in Fig. 13, in this example, the shielding portion 56 is provided in the lower edge of the windshield 51, and the light-diffusing portion 51D is preferably provided in a position corresponding to the shielding portion 56. The shielding portion 56 is referred to as black ceramics, and is formed of black ceramics, for example. The shielding portion 56 is generally provided to ensure the light shielding property or to protect a peripheral edge portion of a laminated glass. While the shielding portion 56 in the example of Fig. 13 is provided on an inner surface of the outer glass plate 51A, the arrangement is not particularly limited, and the shielding portion only needs to be provided on any of an inner surface or outer surface of the glass plates 51A and 51B.

Additionally, in the example of Fig. 13, the colored portion 57 is provided in the upper edge of the windshield 51, and the light-diffusing portion 51D (information display region 55) is provided in a position corresponding to the colored portion 57. Here, the colored portion 57 is a so-called shade band, and can enhance the light shielding property of the upper part of the windshield 51 and increase the anti-glare property or the like.

While the colored portion 57 may be provided in any mode, it is preferably configured of a colored layer 57A provided in the interlayer film 51C as illustrated in the example of Fig. 13. The interlayer film 51C including the colored layer 57A is provided with at least a region including a plurality of resin layers, and at least one of these resin layers is preferably the colored layer 57A. The colored layer 57A is a mixture of resin and coloring agents such as pigments and dyes, and the visible light transmittance is lower than a region of the laminated glass where the colored portion 57 is not provided. Note, however, that the colored portion 57 may be configured of a layer other than the colored layer 57A in the interlayer film 51C, and may be a colored layer provided on an inner surface or outer surface of the outer glass plate 51A, for example.

Although the visible light transmittance of the region where the colored portion 57 is provided is not particularly limited, it may be less than 60%, preferably 40% or less, and more preferably 20% or less, for example. Moreover, the visible light transmittance of the region where the colored portion 57 is provided may be 0.1% or more, and is preferably 1% or more, for example. The region where the colored portion 57 is provided may have at least a portion with a visible light transmittance of the lower limit value or more and the upper limit value or less, but in general, it is sufficient if the region with the lowest visible light transmittance has the lower limit value or more and the upper limit value or less. On the other hand, the region other than the parts where the light-diffusing portion (i.e., information display member), colored portion, and shielding portion are provided preferably has high visible light transmittance from the viewpoint of securing high transparency, specifically 70% or more, preferably 75% or more, and more preferably 80% or more.

Note that while the light-diffusing portion 51D is bonded on the inner glass plate 51B in the example of Fig. 13, as in the first embodiment, it may be disposed in a part where the interlayer film 51C is not provided and be held in the interlayer film 51C, may be embedded in the interlayer film 51C, or at least a part of the interlayer film 51C may form the light-diffusing portion (light diffusion layer).

**In** addition, while the light-diffusing portion 51D is also provided in regions where the colored portion and the shielding portion are not provided, the light-diffusing portion 51D does not need to be provided in regions where the colored portion and the shielding portion are not provided.

Moreover, while the light-diffusing portion 51D is disposed on the inner side of the vehicle than the colored portion 57 in the above description, it may be disposed on the outer side of the vehicle than the colored portion 57 if the transparency of the colored portion 57 is high, for example.

**In** the present embodiment, the information display region 55 preferably displays information necessary for occupants of the automobile such as the driver. Specifically, examples of such information include information indicating the condition of the automobile and information related to driving behavior in a case of autonomous driving. Details of such information are as described earlier.

The information displayed on the windshield 51 only needs to be displayed according to preset conditions, and may be constantly displayed during driving, or may be displayed when a specific driving behavior occurs, for example. Additionally, the information may be customized according to the needs of the occupants to be displayed.

As described above, in the present embodiment, various types of information can be displayed on the windshield 51 for the occupants inside the vehicle according to the needs of the occupants, whereby a highly usable automobile can be provided.

Note that while the above sixth embodiment illustrates a mode in which the light-diffusing portion is provided in the information display region, as in the second and third embodiments, the light-emitting portion or the light controlling device may be provided instead of the light diffusion portion.

Moreover, the light shielding portion or the colored portion may be provided in the side glass or rear glass other than the windshield. In such a case, as in the present embodiment, the information display member may be provided in the position where the light shielding portion or the colored portion is provided. In this case, the region displayed on the information display region is preferably for the inside of the vehicle.

### <Seventh embodiment>

The above first to sixth embodiments illustrate modes in which information is displayed outside the vehicle or both outside and inside the vehicle by providing a member (information display member) for displaying information such as the light-diffusing portion, the light controlling device, and the light-emitting portion in the information display region of the windshield, the side glass, or the rear glass. Note, however, that the information display member does not need to be provided in the information display region of the windshield, the side glass, or the rear glass.

For example, by adjusting the shape of the windshield, the light that passes through the windshield from the light source can be made visible so that information is displayed on the windshield when viewed from outside the vehicle. Specifically, a wedge-shaped laminated glass may be used as the laminated glass of the windshield. Hereinafter, a mode in which, instead of providing the information display member, a wedge-shaped laminated glass is used as the laminated glass of the windshield will be described as a seventh embodiment.

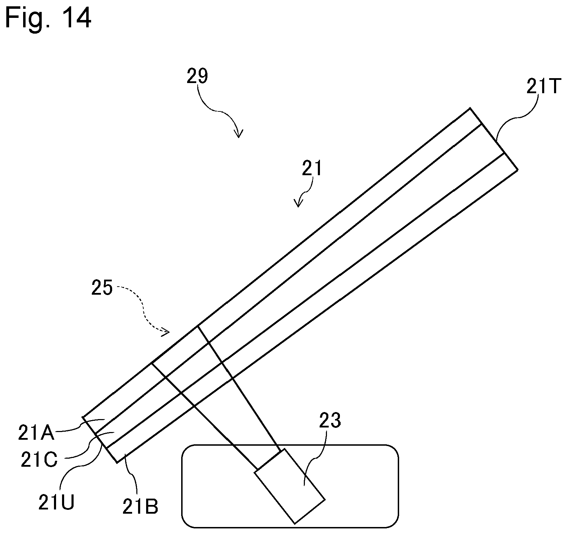

As in the first embodiment, a laminated glass forming a windshield 21 includes glass plates 21A and 21B and an interlayer 21C. As illustrated in Fig. 14, in an information display device 29 according to the present embodiment, by using an interlayer film having a wedge-shaped cross section as an interlayer film 21C, the windshield 21 (laminated glass) can be formed in a wedge shape. As illustrated in Fig. 14, the wedge-shaped interlayer film 21C is preferably an interlayer film with a wedge-shaped cross section, in which the thickness changes from one end 21U toward the other end 21T. Note that the one end 21U is preferably an end portion of the windshield 21 on the lower end side and the other end 21T is an end portion of the windshield 21 on the upper end side. The thickness of the interlayer film 21 preferably changes so as to increase from the one end 21U toward the other end 21T. Additionally, while the thickness of the interlayer film 21C with a wedge-shaped cross section may change over the entire region from the one end 21U to the other end 21T, it is sufficient if a part corresponding to an information display region 25 irradiated with light from a light source 23 at least has a wedge shape having a thickness that changes.

The wedge-shaped laminated glass can be used when displaying information on the inside of the vehicle. Specifically, since light from the light source 23 is reflected by the windshield 21, the reflected light allows the information to be viewed from inside the vehicle as well, and the information can be displayed on a surface of the windshield 21 inside the vehicle. In addition, while the above description illustrates a mode in which information is displayed on the windshield 21, the same applies to modes in which information is displayed on parts other than the windshield such as the rear glass and the side glass.

The wedge-shaped laminated glass according to the present embodiment can be suitably used in modes described in the above embodiments in which information for inside the vehicle is displayed. Parts not described in the seventh embodiment such as modes in which information is displayed in the embodiments are as described in the above embodiments.

Additionally, while cases in which a vehicle windshield, a vehicle side glass, and a vehicle rear glass are used in an automobile have been described in the above description, the vehicle to which the vehicle windshield, the vehicle side glass, and the vehicle rear glass of the present invention are applied is not limited to an automobile, and may be other vehicles. Specifically, examples include electric trains, locomotives, or other railway vehicles, heavy machinery for civil engineering such as forklifts and excavators, carts, and amusement park vehicles. However, the vehicles are not limited thereto.

### <Eighth embodiment>

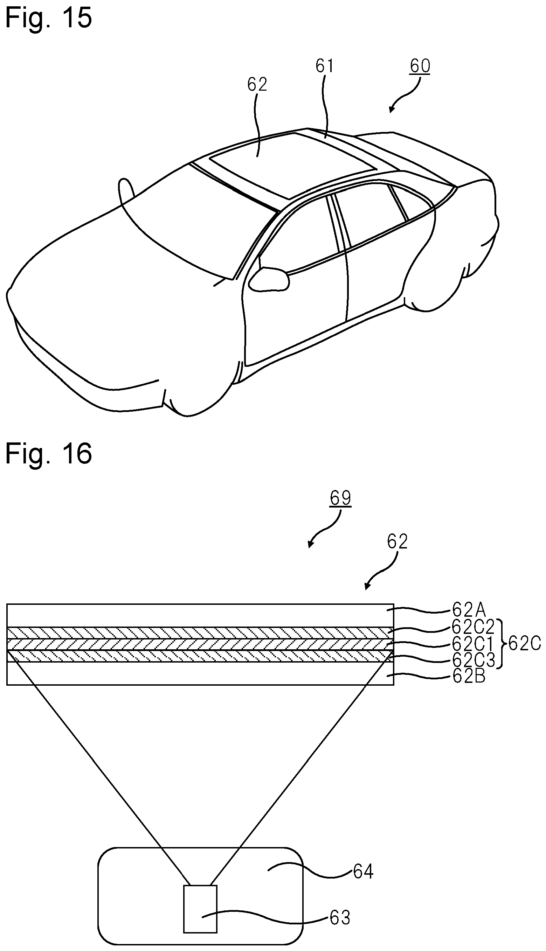

Fig. 15 illustrates an automobile to which an information display device according to an eighth embodiment of the present invention is applied. As illustrated in Fig. 15, an automobile 60 has a roof glass 62 in a roof portion 61.

As illustrated in Fig. 16, in the present embodiment, information is displayed on an entire surface of the roof glass 62 on the inner side of the vehicle. However, information may be displayed in a partial region of the roof glass. The roof glass 62 is irradiated with light from a light source described below to display information on the roof glass 62 by the light from the light source. The roof portion 61 accounts for a large proportion of the inner surface covering the in-vehicle space. Hence, in the present embodiment, an in-vehicle space can be decorated effectively by displaying information on the roof glass 62. Moreover, the roof portion that has conventionally not been used effectively to decorate an in-vehicle space can be utilized effectively.

Note that in a case of displaying information on a part of the roof glass, two or more regions for displaying information may be provided in the roof glass. In the case where information is displayed on two or more regions, two or more light sources may be provided corresponding to the number of regions to irradiate the regions with light from the light sources. However, two or more regions may be irradiated with light from one light source by displacing the emission end of one light source by swinging, for example.

Fig. 16 is a schematic diagram illustrating an information display device 69 according to the present embodiment. As illustrated in Fig. 16, the information display device 69 includes a roof glass 62 and a light source 63. The roof glass 62 includes an outer glass plate 62A outside the vehicle, an inner glass plate 62B inside the vehicle, and an interlayer film 62C including a light controlling device 62C1 disposed between the two glass plates 62A and 62B.

As illustrated in Fig. 16, in the present embodiment, the roof glass has a laminated glass structure. That is, the roof glass 62 preferably includes the outer glass plate 62A, the inner glass plate 62B, and the interlayer film 62C between them, the light controlling device 62C1 preferably provided in the interlayer film 62C.

Typically, the interlayer film 62C includes an outer resin layer 62C2 and an inner resin layer 62C3, includes the light controlling device 62C1 disposed between the resin layer 62C2 and the resin layer 62C3, the resin layers 62C2 and 62C3 and the light controlling device 62C1 form the interlayer film 62C as one body, and is preferably bonded to the glass plates 62A and 62B by the resin layers 62C2 and 62C3. The resin layers 62C2 and 62C3 may be formed of a single layer, or may be formed of a plurality of resin layers.

The visible light transmittance of the light controlling device 62C1 changes by switching between application and non-application of a voltage, and, to be specific, is preferably switched between a mode with high visible light transmittance and a mode with low visible light transmittance by applying and not applying a voltage. Note that in the mode with high visible light transmittance, the roof glass 62 is used as a sun roof.

The light controlling device 62C1 preferably includes a light modulation layer. Note that the light modulation layer is the same as the light modulation layer used in the second embodiment, and therefore descriptions of the light modulation layer are omitted. Additionally, the light controlling device 62C1 is the same as the light controlling device used in the second embodiment, and therefore descriptions of the light controlling device 62C1 are omitted.

While the light controlling device 62C1 may be provided over the entire region of the roof glass, for example in a case where information is displayed on only a partial region of the roof glass as described above, the light controlling device 62C1 may be provided in a partial region of the roof glass. In this case, the light controlling device 62C1 is preferably irradiated with light from a light source, and provided at least in a region where information is displayed. In this case, the light controlling device 62C1 is preferably configured so as to be embedded in the resin layer, for example.

While being switched to a mode with low visible light transmittance, the light controlling device 62C1 is preferably irradiated with light from the light source 63 to display information. When the light controlling device 62C1 is in the mode with low visible light transmittance, light from the light source is scattered by the light modulation layer, such as the liquid crystal layer, and information displayed on the roof glass 62 can be viewed from inside the vehicle.

When the light controlling device 62C1 is switched to the mode with high visible light transmittance, the visible light transmittance of the roof glass 62 may be 70% or more, or may be less than 70%. Note that in this case, the roof glass 62 is used as a sun roof.

On the other hand, when the light controlling device 62C1 is switched to the mode with low visible light transmittance, the visible light transmittance at the part of the roof glass 62 where the light controlling device is provided is preferably less than 70%, may be 50% or less, may be 30% or less, or may be 10% or less, and is preferably 0.1% or more, but may be 1% or more, for example.

The resin used for the resin layer 62C2 and 62C3 of the interlayer film 62C is preferably thermoplastic resin. Note that the thermoplastic resin used for the resin layer 62C2 and 62C3 of the interlayer film 62C is the same as the thermoplastic resin used for the resin layer of the interlayer film in the first embodiment, and therefore descriptions of the thermoplastic resin are omitted.

In a case where the resin layers 62C2 and 62C3 contain thermoplastic resin, the resin layers 62C2 and 62C3 may further contain a plasticizer. Note that the plasticizer used for the resin layers 62C2 and 62C3 of the interlayer film 62C is the same as the plasticizer used for the resin layer of the interlayer film in the first embodiment, and therefore descriptions of the plasticizer are omitted.

Although the thickness of the interlayer film 62C is not particularly limited, it is 0.1 mm to 2 mm, preferably 0.2 mm to 2 mm, and more preferably 0.3 mm to 1 mm, for example.

As the glass plates 62A and 62B, those used in the first embodiment can be used.

The light source 63 is provided inside the vehicle. For example, as illustrated in Fig. 16, the light source 63 may be provided inside a dashboard 64, or may be provided on an upper portion of the dashboard 64. Note that the position where the light source is provided is not limited to the inside or upper portion of the dashboard 64. For example, the light source may be provided behind the rear seats, may be provided in the roof portion, or may be provided between the front seats and the rear seats. The same light source as that used in the first embodiment can be used as the light source 63. Hence, descriptions of the light source 62 are omitted.

Information displayed on the roof glass 62 is preferably an image displayed according to light from the light source 63, and if the light from the light source 63 is monochromatic light, for example, a monochromatic image is displayed on the roof glass 62. Additionally, if the light from the light source 63 is in full-color, a full-color image is displayed on the roof glass 62.

**In** the present embodiment, information for inside the vehicle is displayed on the roof glass 62. The displayed information is preferably information that decorates an in-vehicle space.

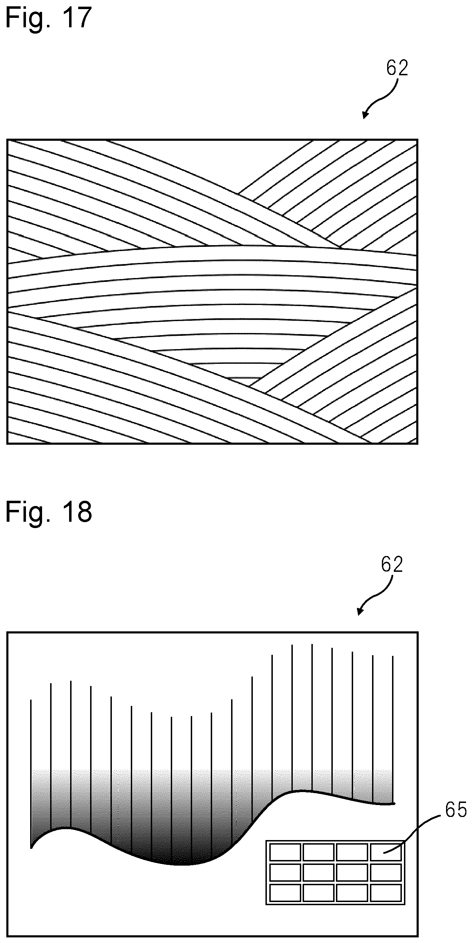

A video for decorating an in-vehicle space is an example of a suitable video to be displayed on the roof glass 62. Specifically, as illustrated in Fig. 17, a pattern that decorates an in-vehicle space such as wave patterns may be displayed on the roof glass 62. Alternatively, as illustrated in Fig. 18, a scenery video that decorates an in-vehicle space such as the scenery of an aurora may be displayed on the roof glass 62. Additionally, together with the scenery video, an icon 65 for instructing an operation on the information display device may be displayed.

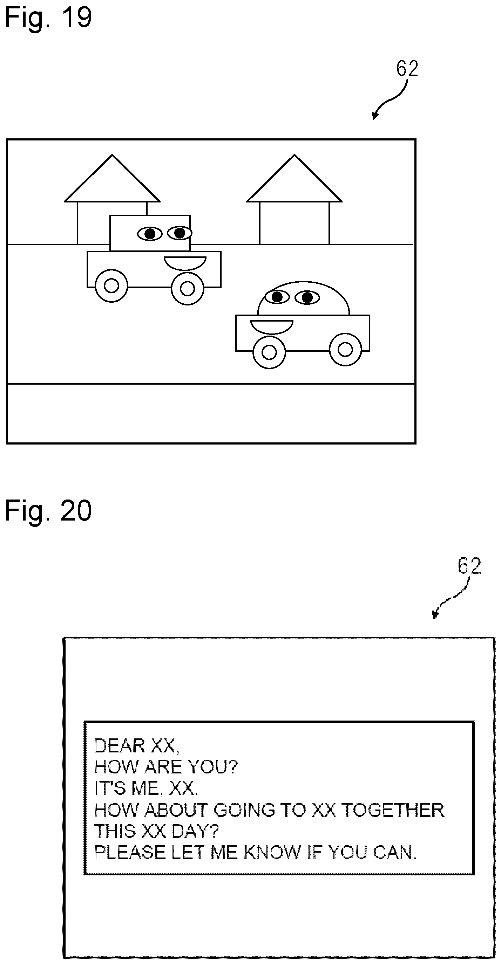

Moreover, as illustrated in Fig. 19, entertainment information of a movie, music, animation, games, comics, characters, and the like may be displayed on the roof glass 62. Additionally, as illustrated in Fig. 20, messages such as mails may be displayed on the roof glass 62.

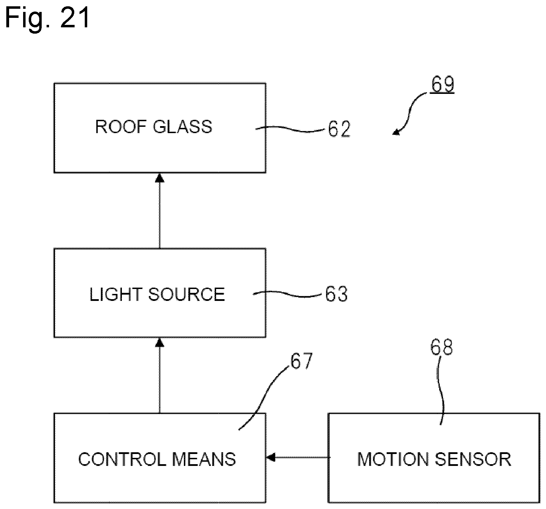

Fig. 21 is a block diagram illustrating a control system of the information display device 69. As illustrated in Fig. 21, the information display device 69 preferably includes, in addition to the roof glass 62 and the light source 63, a control means 67 and a motion sensor 68. The control means 67 performs overall control of the information display device 69 and is configured of a CPU or the like provided in an automobile, but is not particularly limited.

The control means 67 controls ON and OFF of the light source 63 and the operation of the light source 63 according to the information to be displayed on the roof glass 62. Additionally, the control means 67 may be configured to control the behavior of the automobile as a whole.

The motion sensor 68 is a sensor that detects the motion of touching the roof glass using a camera, an IR sensor, an ultrasonic sensor, or the like, and it is possible to detect the touch motion without providing a conductive layer or the like on the roof glass. The motion sensor 68 may be a sensor that detects motions other than touch input, such as a sensor that can detect when a person approaches the roof glass. Alternatively, a touch sensor may be used instead of the motion sensor. **In** this case, too, a touch motion on the roof glass can be detected. The touch sensor may be of the capacitance type, resistive film type, or other type, for example. The motion sensor and the touch sensor may be used together.

The display of the roof glass 62 may be turned on and off or the display may be switched when a touch input or a specific motion other than a touch input is detected by the motion sensor or touch sensor. Moreover, the display of the roof glass 62 may be turned on and off or the display may be switched in response to a switch input by a detection means other than the motion sensor, the touch sensor, or the like.

### <Ninth embodiment>

While the light controlling device 62C1 is provided in the roof glass 62 in the above eighth embodiment, the light controlling device 62C1 does not need to be provided as long as information can be displayed by light from the light source 63.

For example, a light-diffusing portion may be provided instead of providing the light controlling device 62C1. A mode in which a light-diffusing portion is provided instead of providing the light controlling device 62C1 is described below as a ninth embodiment. Note that in the following description, parts where descriptions are omitted are the same as the eighth embodiment.

An interlayer film is provided with a light-diffusing portion in which light from a light source is incident, and the incident light is diffused, and thereby, an image corresponding to the incident light can be displayed as information. **In** the present embodiment, preferably, the interlayer film has so-called forward light diffusivity, and light incident from the light source inside the vehicle is diffused and emitted forward, that is, to inside the vehicle, whereby information according to the light from the light source can be displayed to the inside of the vehicle.

To diffuse the incident light, the light-diffusing portion preferably contains light-diffusing particles. The light-diffusing particles used for the light diffusing portion can be those usable in the first embodiment.

The interlayer film may be composed of a single layer or may have a multilayer structure. In the case where the interlayer film has a single-phase structure, the single resin layer is the resin layer containing light-diffusing particles. In the case where the interlayer film has a multilayer structure, of the layers forming the interlayer film, some layers may contain the light-diffusing particles and form a light-diffusing portion, or all layers may contain the light-diffusing particles and form a light-diffusing portion.

### <Tenth embodiment>

A light-emitting portion may be provided instead of the light controlling device 62C1. Hereinafter, a mode in which a light-emitting portion is provided instead of the light controlling device 62C1 in the eighth embodiment will be described as a tenth embodiment. Note that in the following description, parts where descriptions are omitted are the same as the eighth embodiment.

The light-emitting portion is a part that emits light itself when irradiated with light from a light source, and specifically, it is preferable that the light-emitting portion contains a fluorescent material. Fluorescent materials usable in the third embodiment can be used.

The interlayer film may be composed of a single layer, or may have a multilayer structure. In the case where the interlayer film has a single-layer structure, the single resin layer is the resin layer containing a fluorescent material. In the case where the interlayer film has a multilayer structure, of the layers forming the interlayer film, some layers may contain a fluorescent material and form a light-emitting portion, or all layers may contain the fluorescent material and form a light-emitting portion.

Note that in the above eight to ten embodiments, as described above, the light controlling device, the light-diffusing portion, and the light-emitting portion may be provided over the entire region of the roof glass, or may be provided partially.

For example, in the case where it is provided in a partial region, the interlayer film may be formed of a single or plurality of resin layers, a region where the interlayer film is not provided may be formed between the glass plates, and the light controlling device, light-diffusing portion, and light-emitting portion may be disposed in the region where the interlayer film is not provided. Note, however, that the region where the interlayer film is not provided does not need to be provided, and, as described above, the components may be held by the interlayer film by being embedded in the interlayer film or bonded on a surface of the interlayer film.

Moreover, the light controlling device, light-diffusing portion, or light-emitting portion does not need to be held by the interlayer film as described above, but may be provided by being bonded to any of glass plates 62A and 62B of a laminated glass 62. Specifically, any of the light controlling device, interlayer film, and light-emitting portion may be bonded on an inner surface or outer surface of the outer glass plate 62A or inner surface or outer surface of the inner glass plate 62B, for example.

Moreover, the light controlling device, interlayer film, and light-emitting portion may form at least a part of a glass plate, and by mixing light-diffusing particles in at least one of the glass plates 62A or 62B, for example, at least one of the glass plates 62A or 62B may be used to diffuse light. Alternatively, by mixing fluorescent particles in at least one of the glass plates 62A or 62B, at least one of the glass plates 62A or 62B may be used as a light-emitting portion.

Moreover, in the above description, the roof glass does not need to be a laminated glass, and may be a single glass plate being composed of one glass plate. In the case of a single glass plate, the light-diffusing portion, light controlling device, and light-emitting portion may be bonded on an outer surface or inner surface of the single glass plate. Moreover, the single glass plate itself may be used as a light-diffusing portion by mixing light-diffusing particles in the single glass plate, or the single glass plate itself may be used as a light-emitting portion by mixing a fluorescent material in the single glass plate.

Additionally, in a case where the light controlling device, light-diffusing portion, or light-emitting portion has sufficient strength for the roof glass, the roof glass may be formed only of the light controlling device, light-diffusing portion, or light-emitting portion.

### <Eleventh embodiment>

While the above eighth to tenth embodiments illustrate modes in which the roof glass is provided with a member (information display member) for displaying information such as the interlayer film, light controlling device. and light-emitting portion that diffuse light to display information inside the vehicle, the roof glass does not need to be provided with an information display member. For example, by adjusting the shape of the roof glass, it is possible to display information on the roof glass to be viewed.

Specifically, a wedge-shaped laminated glass may be used as the laminated glass of the roof glass. Hereinafter, a mode in which a wedge-shaped laminated glass is used as the laminated glass of the roof glass will be described as an eleventh embodiment. Note that in the following description, parts where descriptions are omitted are the same as the eighth embodiment.

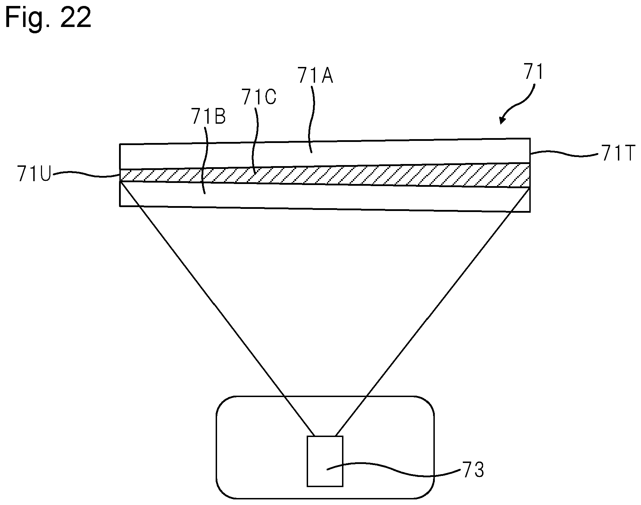

As in the eighth embodiment, the laminated glass forming a roof glass 71 includes glass plates 71A and 71B and an interlayer film 71C. The interlayer film 71C preferably is formed of a single or plurality of resin layers. As illustrated in Fig. 22, in the present embodiment, by using an interlayer film with a wedge-shaped cross section as the interlayer film 71C, a laminated glass 71 can be formed in a wedge shape. As illustrated in Fig. 22, the wedge-shaped interlayer film 71C is preferably an interlayer film with a wedge-shaped cross section whose thickness changes from one end 71U to the other end 71T. The thickness of the interlayer film 71 preferably changes so as to increase from the one end 71U toward the other end 71T. The thickness of the interlayer film 71C with a wedge-shaped cross section may change over the entire region from the one end 71U to the other end 71T.

When the wedge-shaped laminated glass is used as the laminated glass of the roof glass, light from a light source is reflected by the laminated glass, and the reflected light can display information for inside the vehicle on the roof glass.

<Modification of eighth to eleventh embodiments>

The above eighth to eleventh embodiments are modes in which information is displayed on the roof glass. However, the information display device of the present invention is not limited to a device that displays information on the roof glass as long as it displays information on a surface of the roof portion on the inside of the vehicle. For example, the information display device may include a light source that irradiates a vehicle interior surface of a roof portion with no roof glass with light, and display information on the vehicle interior surface of the roof portion by the light from the light source.

### <Twelfth embodiment>

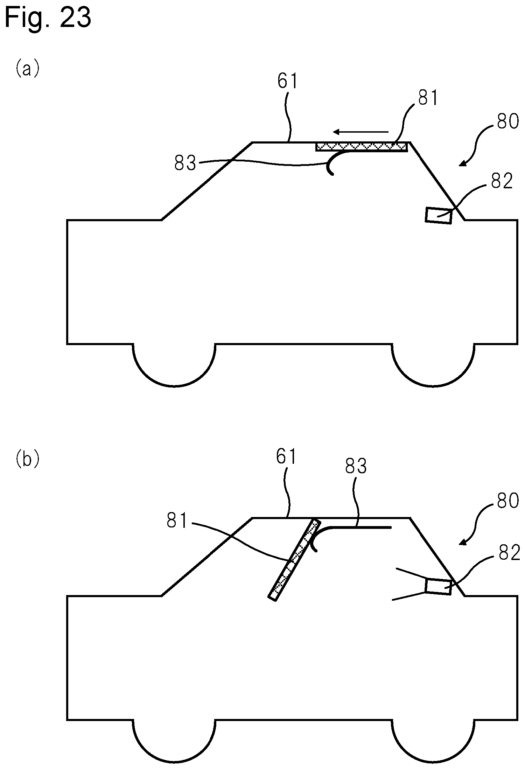

As illustrated in Fig. 23, an information display device 80 of a twelfth embodiment includes a screen 81 that can be hung down and provided in a roof portion 61 of the vehicle and a light source 82 that irradiates the screen 81 with light, and displays information on the screen 81 by the light from the light source 82. As a result, the occupants of the vehicle can view entertainment information, for example, on a large display screen. For example, as illustrated in Fig. 23, the screen 81 can be hung down by moving the screen 81 along a guide 83.

The screen 81 may be a normal white sheet screen. Alternatively, the screen 81 may be the light controlling device used in the eighth embodiment, may be the light-diffusing portion used in the ninth embodiment, may be the light-emitting portion used in the tenth embodiment, or may be the laminated glass used in the four embodiments. Among these, the screen is preferably formed of one of the light controlling device, the light-diffusing portion, and the light-emitting portion, more preferably formed of the light controlling device or the light-diffusing portion, and even more preferably formed of the light controlling device.

In addition, from the perspective of making it lightweight, the screen 81 is preferably formed of a resin film, and as a light controlling device, it is preferably formed of a light modulating film as described above. Moreover, the light-diffusing portion or light-emitting portion is preferably a resin film including a resin layer obtained by mixing light-diffusing particles or a fluorescent material in resin.

In the case where the screen 81 is a light controlling device, when it is stored in a lower surface of the roof portion and not displaying information (Fig. 23(a)), by switching to the mode with high visible transmittance, the screen 81 becomes transparent and less recognizable, so that it does not degrade the design of in-vehicle space. On the other hand, when the screen 81 is hung down, by switching to the mode with low visible transmittance, various videos can be displayed on the screen 81 with high contrast.

Moreover, in a case where the roof portion has a roof glass and the screen is stored in a lower surface of the roof portion, the screen is preferably disposed so as to overlap the roof glass. In the case where the screen is stored so as to overlap the roof glass, light from the roof glass can be shielded by the screen. In particular, in the case of a light controlling device, the visible light transmittance can be increased and decreased by turning on and off the power, whereby light from the roof glass can be shielded or transmitted according to the occupant's request.

Moreover, the screen 81 may be irradiated with light from a light source and display information on the screen 81 not only in the hung-down state but in the state stored in the lower surface of the ceiling.

Additionally, while the above description has been given of a case where the vehicle roof is used for an automobile, the vehicle to which the vehicle roof of the present invention is applied is not limited to an automobile, and may be other vehicles. Specific examples include electric trains, locomotives, or other railway vehicles, as well as heavy machinery for civil engineering such as forklifts and excavators, carts, and amusement park vehicles, but the vehicle is not limited thereto.

The above first to twelfth embodiments and modifications thereof are merely an example of the information display device of the present invention, and the information display device of the present invention is not limited to the above first to twelfth embodiments and modifications thereof.

### Reference Signs List

10, 30, 40, 50, 60 automobile
11, 21, 51 windshield
11A, 21A, 31A, 41A, 51A, 62A, 71A outer glass plate
11B, 21B, 31B, 41B, 51B, 62B, 71B inner glass plate
11C, 21C, 31C, 41C, 51C, 62C, 71C interlayer film
11D, 31D, 51D light-diffusing portion
13, 23, 33, 43, 53, 63, 82 light source
15, 25, 35, 45, 55 information display region
16, 46 message
17 control means
18 detection means
19, 29, 39, 49, 59, 69, 80 information display device
31 side glass
36 icon
41 rear glass
41D light controlling device
56 shielding portion
57 colored portion
61 roof portion
62, 61 roof glass
62C1 light controlling device
62C2, 62C3 resin layer
64 dashboard
65 icon
67 control device
68 motion sensor
81 screen
83 guide

## Claims

1. An information display device comprising a vehicle windshield, and a light source irradiating the vehicle windshield with light, the information display device displaying at least one of information for outside a vehicle or information for inside a vehicle on the vehicle windshield using light from the light source.

2. The information display device according to claim 1, wherein information for outside the vehicle is displayed.

3. An information display device comprising a vehicle side glass and a light source irradiating the vehicle side glass with light, the information display device displaying at least one of information for outside a vehicle or information for inside a vehicle on the vehicle side glass using light from the light source.

4. An information display device comprising a vehicle rear glass and a light source irradiating the vehicle rear glass with light, the information display device displaying at least one of information for outside a vehicle or information for inside a vehicle on a vehicle rear glass using light from the light source.

5. An information display device comprising a light source that irradiates a vehicle interior surface of a roof portion of a vehicle with light, the information display device displaying information on the vehicle interior surface of the roof portion using light from the light source.

6. The information display device according to claim 5, wherein a roof glass is provided in the roof portion and the light source irradiates the roof glass with light.

7. An information display device comprising a screen that is capable of hanging down provided in a roof portion of a vehicle, and a light source that irradiates the screen with light, the information displaying information on the screen using light from the light source.
